# EUROPÄISCHE PATENTSCHRIFT

(11) **EP 1 537 947 B1**
(45) Veröffentlichungstag und Bekanntmachung des Hinweises auf die Patenterteilung: **12.05.2010**
(21) Anmeldenummer: 04028459.8
(22) Anmeldetag: 01.12.2004
(51) Int. Cl.: B23Q 17/20, B23Q 15/22, G01B 21/04, G01B 5/00

(54) **Längenmessvorrichtung**
Length measuring device
Dispositif de mesure de longueur d'une pièce

(30) Priorität: 01.12.2003 DE 20318571 U
(43) Veröffentlichungstag der Anmeldung: 08.06.2005
(73) Patentinhaber: Otto Martin Maschinenbau GmbH & Co., 87724 Ottobeuren (DE)
(72) Erfinder: Jansen, Georg, 87724 Ottobeuren (DE); Mühldorfer, Michael, 87677 Stöttwang (DE); Martin, Peter, 87700 Memmingen (DE)
(74) Vertreter: Pfister, Stefan Helmut Ulrich

(56) Entgegenhaltungen:
- GB-A- 1 498 009
- US-A- 5 978 748
- US-B1- 6 470 584
- US-B1- 6 519 860

## Beschreibung

Die Erfindung betrifft eine Längenmeßvorrichtung, die an einer Maschinenreferenzfläche anstellbar ist, insbesondere zur Einstellung von Werkzeugen an Bearbeitungsmaschinen mit einer Steuerung.

Vorrichtungen zum Einstellen von Bearbeitungswerkzeugen bzw. zum Bestimmen der dazu notwendigen Maße an Bearbeitungsmaschinen wie z.B. Fräs- oder Kehlmaschinen, die vorzugsweise zur Bearbeitung von Holz- und Kunststoffwerkstoffen, dienen, sind bekannt. Die Einstellung findet anhand mindestens eines Abstandes wischen einem Werkzeugreferenzpunkt und einer Maschinenreferenzfläche statt. Die Werkzeugreferenzpunkte sind dabei meist markante Punkte an den Schneiden, wie beispielsweise grösster oder kleinster Radius, Ober- oder Unterkanten usw. Insbesondere komplexe Profilmesserköpfe weisen oft zahlreiche mögliche Werkzeugreferenzpunkte auf, die mit einem Messtaster teilweise schwer erreichbar sein können. Dies ist beispielsweise der tiefste Punkt in einer schmalen Nut. Maschinenreferenzflächen sind feststehende oder definierte bewegliche Flächen, beispielsweise Maschinentische, Anschlagflächen oder Anschlaglineale.

Aus dem Stand der Technik ist die Druckschrift US 6,519,860 B1 bekannt. Diese beschreibt eine Koordinatenmessmaschine, die auf einer Maschinenreferenzfläche eines Maschinengestells auflegbar ist und die eine Messeinrichtung und eine Schnittstelle zur Steuerung einer Bearbeitungsmaschine aufweist, die zur Übertragung der gemessenen Werte an die Steuerung dient. In einer alternativen Ausführungsform dieser Veröffentlichung ist die Koordinatenmessmaschine auf ein am Maschinengestell befestigtes Ansatzstück lesbar.

Des Weiteren ist aus dem Stand der Technik die Druckschrift US 6, 470, 584 B1 bekannt. Diese beschreibt einen Probenarm zum Auffinden einer Probe an einer Maschine. Der Probenarm umfasst eine Signalzustandsschaltung, die Probenstatussignale erzeugt, die zur Maschine weitergeleitet werden. Der Probenarm ist rechtwinklig abgebogen.

Eine weitere Druckschrift des Standes der Technik GB 1 498 001 besitzt eine Aufstellfläche, auf der die gesamte Vorrichtung steht. In der Fig. 1 dieser Druckschrift ist dazu eine Grundplatte bezeichnet. Weitere Aufstellflächen beziehungsweise Stützflächen sind dieser Druckschrift nicht zu entnehmen. In dieser Druckschrift sind Gewichte offenbart, die Flächen besitzen. Diese würden sich, selbst wenn sie plan gearbeitet wären, nicht eignen, um als Aufstell- beziehungsweise Anlagefläche zu dienen, um beispielsweise mit einer Maschinenreferenzfläche zusammenzuwirken, die dazu bestimmt ist, die Lage von bestimmten Werkzeugen der Bearbeitungsmaschine beispielsweise zu ermitteln.

Aus dem Stand der Technik ist ein Messgerät bekannt, das weitestgehend frei auf einer horizontalen oder vertikalen Referenzfläche positionierbar ist. Dieses Gerät erlaubt eine Messung von Referenzpunkten, wobei nur in Ausnahmefällen dazu Werkzeugachsen bewegt werden müssen. Durch die fehlende direkte Verbindung zu einer Maschinensteuerung ist aber die manuelle Übertragung des gemessenen Wertes mit zeitaufwendigen, unbequemen und fehleranfälligen manuellen Eingaben an der Maschinensteuerung notwendig. In waagerecht liegender Meßstellung hat das Gerät den Nachteil, daß es zueinander korrespondierende Anlageebenen bzw. Auflageflächen besitzt, die im wesentlichen flach ausgebildet sind. Im übrigen ist mit dieser Vorrichtung nur eine exakt waagerechte Lage für die Messung gegeben, so daß komplizierte und außerhalb der waagerechten Ebene liegende Meßpunkte nicht mittels des Gerätes erreichbar sind.

Es ist weiterhin ein Eichgerät für Tisch-/Fräsmaschinen bekannt, welches aus einem Griff mit angeformter Referenzfläche besteht. Vor der Referenzfläche ist ein Taster angebracht. Zur Einstellung beispielsweise der Höhenachse wird das Eichgerät mit der Referenzfläche so auf den Maschinentisch gelegt, daß sich der Taster im Freiraum über dem zu diesem zeitpunkt unter den Tisch gefahrenen Werkzeug befindet. Wird das Werkzeuge jetzt nach oben gefahren, berührt es den Taster und hebt diesen an. Wenn der Taster bis auf die Höhe der Referenzfläche angehoben ist, wird ein elektrisches Signal über ein Kabel an die Maschinensteuerung gegeben. Dieses Signal setzt die entsprechende Achse; in diesem Fall die Höhenachse auf 0. Meßwerte können mit dem Taster nicht übertragen werden. Es handelt sich lediglich um eine Kontaktberührung. Das Gerät erlaubt daher zwar eine Einstellung der Höhenachse auf 0 und darauf aufbauend die Einstellung der gewünschten Maße. Es hat aber den wesentlichen Nachteil, daß das notwendige Anfahren von Referenzebenen einen Zeitaufwand erfordert, der sich nachteilig auf den Einstellvorgang auswirkt. Es ist dadurch ein erheblicher Zeitverlust zu verzeichnen, dessen Eleminierung wünschenswert ist. Zudem ist eine Eichung in horizontaler Ebene prinzipiell nicht bzw. nur sehr eingeschränkt möglich, da das Werkzeug hinter die vertikale Anschlagebene gefahren werden muß und der maximale Durchmesser des Werkzeuges damit stark beschränkt wird.

Ausgehend von diesem Stand der Technik ist es Aufgabe der Erfindung, eine Anordnung vorzuschlagen bei welcher der Zeitaufwand für das Kalibrieren bzw. Eichen von Werkzeugen, insbesondere in deren Bearbeitungsposition, reduziert wird.

Zur Lösung der gestellten Aufgabe schlägt die Erfindung eine Längenmeßvorrichtung mit den Merkmalen des Anspruchs 1 vor. Die Längenmeßvorrichtung selbst weist eine Meßeinrichtung auf und besitzt eine Schnittstelle zur Steuerung der Bearbeitungsmaschine, die zur Übertragung der gemessenen Werte an die Steuerung dient. Dadurch wird erreicht, daß durch die direkte Übertragung der Meßwerte an die Steuerung der Bearbeitungsmaschine ein Anfahren der Referenzebene zusätzlich nicht mehr notwendig ist. Vielmehr erlaubt es die Längenmeßvorrichtung jetzt, daß die Direktübertragung der gemessenen Werte an die Steuerung sichert, daß die Steuerung die entsprechenden werte verarbeitet und die Achse des Bearbeitungswerkzeuges entsprechend positioniert, so daß das Bearbeitungswerkzeug genau auf die dem Werkzeug entsprechenden Bearbeitungsmaße dann einstellbar ist. Das zeitaufwendige Anfahren der Referenzebenen sowie die manuelle Übertragung eines gemessenen Wertes an die Steuerung entfällt durch den erfindungsgemäßen Vorschlag. Dadurch werden insbesondere auch Übertragungsfehler ausgeschlossen, die durch eine manuelle Eingabe bei Lösungen des Standes der Technik auftreten können.

Nach der Erfindung ist vorgesehen, daß die Längenmeßvorrichtung einen Grundkörper aufweist, der mindestens eine an eine Maschinenreferenzfläche anlegbare Aufstellfläche aufweist. Erfindungsgemäß sind demnach Anordnungen vorgesehen, bei welchen die Längenmeßvorrichtung zwei Aufstellflächen besitzt. Durch das Zusammenwirken mehrerer Aufstellflächen mit den entsprechenden Maschinenreferenzflächen ist es möglich, die Längenmeßvorrichtung exakter zu positionieren beziehungsweise auch das Ermitteln von unterschiedlichen Werten beziehungsweise Koordinaten zu erlauben. Durch eine solche Ausgestaltung wird die Flexibilität einer solchen Anordnung erheblich erhöht.

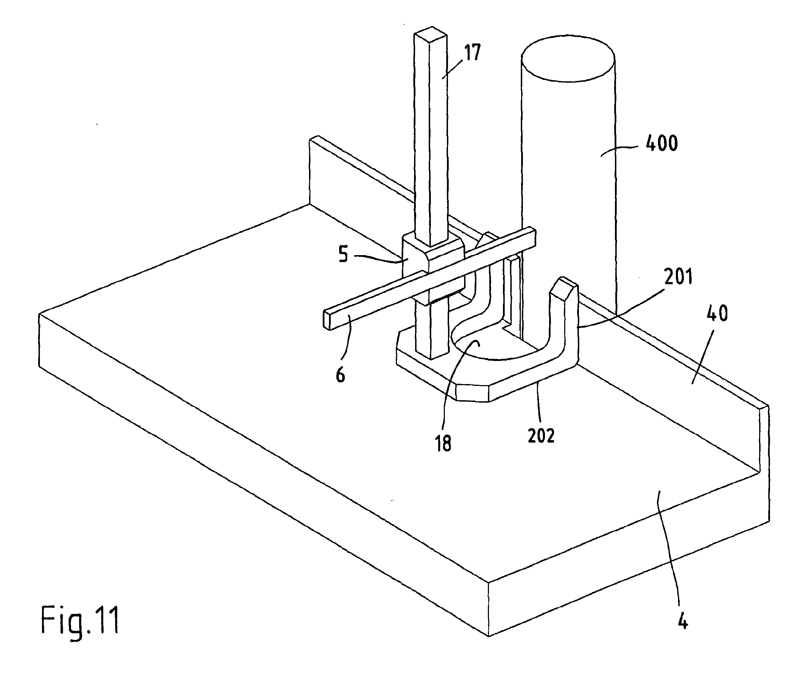

So ist es nach der Erfindung vorgesehen, daß der Grundkörper zwei orthogonal, bevorzugt rechtwinklig zueinander orientierte erste und zweite Aufstellflächen aufweist und diese Aufstellflächen je an unterschiedliche erste und zweite Maschinenreferenzflächen anlegbar sind. Durch eine solche erfindungsgemäße Ausgestaltung ist es prinzipiell möglich, eine zweidimensionale Vermessung durchzuführen. Dies ist insbesondere in den Figuren 11 bis 14 ausgeführt und gezeigt.

Dabei beschränkt sich die Erfindung nicht nur darauf, daß die Längenmeßvorrichtung auf einem Maschinentisch als Maschinenreferenzfläche auflegbar ist, die Längenmeßvorrichtung ist bereits im Sinne der Erfindung einsetzbar, wenn diese an eine wie auch immer orientierte Maschinenreferenzfläche anlegbar ist. Anlegen bedeutet dabei nicht nur, daß die Aufstellfläche der Längenmeßvorrichtung auf der Maschinenreferenzfläche anliegt, also berührt, sondern sie vermag zum Beispiel auch auf diese aufgestellt zu sein, also sie ist aufstellbar oder an die Maschinenreferenzfläche auch anpreßbar. Es kommt darauf an, daß die Aufstellfläche geometrisch exakt positioniert ist bezüglich der Maschine beziehungsweise der Maschinenreferenzfläche. Diese anschlagartige Funktion kann dabei bei jeder geometrischen Orientierung erreicht werden, also zum Beispiel Aufstellen, seitlich Anlegen oder Anpressen beziehungsweise Andrücken.

Gleiches wird eigentlich auch bereits mit der Formulierung "aufstellbar" ebenfalls ausgedrückt, wobei es letztendlich darauf ankommt, die Lage der Aufstellfläche bezüglich der Maschinenreferenzfläche festzulegen.

Im Zusammenhang mit dieser Erfindung wird auch oftmals eine Aufstellfläche an der Längenmeßvorrichtung erwähnt. Auch die Formulierung "Aufstellfläche" beinhaltet keine geometrisch zwingende Anordnung, derart, daß sich die Längenmeßvorrichtung auf, also über der Maschinenreferenzfläche zu befinden hat. Der Begriff "Aufstellfläche" ist vielmehr dahingehend zu verstehen, daß eine Fläche vorgesehen ist, die sich an der Längenmeßvorrichtung befindet und die in geeigneter Weise mit der Maschinenreferenzfläche beziehungsweise einer dieser Maschinenreferenzflächen zusammenwirkt. Auf die konkrete Orientierung beziehungsweise räumliche Anordnung dieser Aufstellfläche kommt es dabei nicht an. Dabei ist auch zu beachten, daß gemäß der Erfindung eine Drehung der erfindungsgemäßen Längenmeßvorrichtung möglich ist, wodurch dann andere Aufstellflächen zum Einsatz kommen, die dann gegebenenfalls "unten" liegen, aber auch in ihrer "seitlichen", unverdrehten Lage ebenfalls mit einer entsprechenden Maschinenreferenzfläche zusammenwirken. Der Begriff der "Aufstellfläche" ist insofern sehr umfassend zu verstehen.

Erfindungsgemäß wurde gefunden, daß es von Vorteil ist, wenn die Längenmeßvorrichtung einen abgebogenen und griffgünstig geformten Grundkörper besitzt, der eine auf einer Maschinenreferenzfläche aufstellbare Aufstellfläche aufweist. Durch diese Aufstellfläche zum einen und zum anderen durch den ergonomisch günstigen abgebogenen Grundkörper wird eine sehr einfache Bedienung der Längenmeßvorrichtung erreicht. Insbesondere ist eine genaue Positionierung beispielsweise in senkrechter Meßlage auf der Aufstellfläche gegeben. Dazu wird die Vorrichtung zum Beispiel auf dem Maschinentisch aufgestellt und ein Meßfühler bis auf die Maschinentischebene ausgefahren. Damit wird die Meßvorrichtung auf Null geeicht.

Dabei ist es von Vorteil, wenn der Grundkörper rechtwinklig, bezogen auf die Aufstellfläche abgebogen ist. Das rechtwinklige Abbiegen des Grundkörpers erlaubt es, die entsprechenden Komplettierungselemente wie Führungsgehäuse und Taster in dem entsprechenden Winkel an dem Grundkörper anzuordnen.

Eine Weiterbildung der Erfindung sieht vor, daß der Grundkörper eine von der Kreisbogenform abweichende Form aufweist.

Entsprechend einer vorteilhaften Weiterbildung ist es vorgesehen, daß ein Stützkörper mit einer Stützfläche vorgesehen ist, der den Grundkörper zur Maschinenreferenzfläche hin abstützt. Dieser Stützkörper erlaubt es nun, die Längenmeßvorrichtung bzw. den Grundkörper mit dem Stützkörper zusammen auf der Referenzfläche zu positionieren und zwar derart, daß dieser genau auf der Maschinenreferenzfläche aufliegt, und zwar in dem vorbestimmten rechten Winkel in einer Meßanordnung für waagerecht durchzuführende Messungen. Der Stützkörper erlaubt es aber auch, beispielsweise waagerecht aufliegende Meßvorgänge mit Bezug zur Maschinenreferenzfläche durchzuführen. Dies wird in späteren vorteilhaften Weiterbildungen noch ausführlich beschrieben werden.

Die so beschriebene Lösung kommt dabei ohne zusätzlich bereitzustellende oder zu definierende Bezugspunkte bzw. Referenzmeßpunkte aus, wodurch eine weitere Fehlerquelle eliminiert wird.

Wie zuvor erwähnt, ist die erfindungsgemäße Längenmeßvorrichtung auch für Meß- bzw. Einstellvorgänge geeignet, deren Meßlage in waagerechter bzw. im wesentlichen waagerechter Stellung mit Bezug auf die Maschinenreferenzfläche vorgesehen ist. Hierzu ist es von Vorteil, daß der Stützkörper entsprechend einer Weiterbildung der Erfindung breiter ausgebildet ist als der Grundkörper, wodurch speziell in waagerechter Meßlage erreicht wird, daß der gesamte Grundkörper nicht genau waagerecht zur Maschinenreferenzfläche positioniert wird, sondern in einer Schräglage bzw. winklig zu dieser Maschinenreferenzfläche.

An dieser Stelle sei darauf hingewiesen, daß es bei der Erfindung auf eine im Wesentliche waagerechte Stellung beziehungsweise Ausrichtung nicht zwingend ankommt. Nach der Erfindung sind natürlich auch andere Orientierungen beziehungsweise relative Lagen realisierbar.

Erfindungsgemäß wurde gefunden, daß es von Vorteil ist, wenn die Stützfläche und die Aufstellfläche je eine Längserstreckung aufweisen und die Längserstreckungen der Stützfläche und der Aufstellfläche orthogonal, bevorzugt rechtwinklig zueinander sind. Diese Ausführungsform ermöglicht eine exakte und sichere Aufstellung der Längenmeßvorrichtung auf der Maschinenreferenzfläche.

In einer bevorzugten Variante der Erfindung ist vorgesehen, daß der Grundkörper gabelartig, in zwei Anstellschuhe geteilt, ausgebildet ist.

Diese Teilung bewirkt, daß sich zwischen dem ersten und dem zweiten Anstellschuh ein Freiraum ausbildet, in dem dann zum Beispiel das Werkzeug einzutauchen vermag und so nicht mit der Längenmeßvorrichtung beziehungsweise Teilen davon kollidiert. Gleichzeitig verbreitet sich durch die beabstandeten Anstellschuhe die gesamte Längenmeßvorrichtung, was zu einer erhöhten Stabilität führt und ein Verkippen oder unbeabsichtigtes Umfallen zu verhindern hilft.

In einer bevorzugten Variante der Erfindung ist vorgesehen, daß der Grundkörper beziehungsweise der Anstellschuh abgewinkelt ausgebildet ist, um so eine erste und zweite Aufstellfläche zu bilden.

Es ergibt sich dann in einfacher Weise die Ausgestaltung der beiden Aufstellflächen, die sich im Bereich der Abwinklung entsprechend anschließen.

Günstigerweise sind zum Beispiel die Anstellschuhe L-artig ausgebildet und beide Schenkel des L's bilden die Aufstellflächen.

Erfindungsgemäß ist es auch vorgesehen, daß ein Führungsgehäuse am Grundkörper beweglich oder fest angeordnet ist und in dem Führungsgehäuse eine einen Meßfühler tragende Taststange beweglich gelagert und geführt ist. Durch diese Art der Ausbildung ist es gegeben, daß mittels der Taststange die beispielsweise einen Meßfühler trägt, sehr einfach von der Maschinenreferenzebene aus die jeweiligen Bezugspunkte am Bearbeitungswerkzeug der Bearbeitungsmaschine erreicht und bestimmt werden können. Von Vorteil ist es auch, wenn der Grundkörper breiter ausgebildet ist, als das Führungsgehäuse.

Erfindungsgemäß wird vorgeschlagen, daß ein Führungsgehäuse am Grundkörper beweglich oder fest angeordnet ist. Das Führungsgehäuse kann daher zum Beispiel am Grundkörper beweglich ausgebildet sein, um zum Beispiel einen weiteren Freiheitsgrad bei der Positionierung des Meßfühlers zu realisieren. Günstigerweise ist die Ausbildung dabei so gewählt, daß die Freiheitsgrade auch festlegbar sind, also zum Beispiel durch eine entsprechende Reibung oder Klemmung eingestellte Werte auch durch die Elektronik auslesbar sind.

Das Führungsgehäuse ist dabei gemäß der Erfindung sehr flexibel und variabel ausgestaltet. Es kann als Teil des Grundkörpers mit diesem verbunden oder an diesem beweglich gleitend ausgebildet sein.

In einer bevorzugten Variante der Erfindung ist vorgesehen, daß der Grundkörper einen Führungsstab aufweist und das Führungsgehäuse auf dem Führungsstab verschiebbar gelagert und geführt gegebenenfalls festlegbar ist. Der Führungsstab ist in dieser Variante Teil des Grundkörpers und dient als Führung.

Günstigerweise ist vorgesehen, daß der Meßfühler am Ende der Taststange angeordnet ist. So stört die Taststange nicht bei dem Zusammenwirken des Meßfühlers mit dem Werkzeug beziehungsweise der Werkzeugkontur, zum Beispiel einem kleinen, vorstehenden Messer. Auch wird durch eine solche Anordnung die maximale Länge der Taststange idealerweise ausgenützt.

In einer bevorzugten Variante der Erfindung ist vorgesehen, daß die Taststange zwei Meßfühler, bevorzugt an ihren Enden trägt. Die Anordnung ist darauf nicht beschränkt, nur einen Meßfühler zu besitzen. Je nach Anordnung der Taststange, sei es, daß diese im Betrieb vertikal oder horizontal eingesetzt wird, ist dabei vorgesehen, daß je ein Meßfühler oben und unten oder vorne und hinten an der Taststange angeordnet ist. Durch eine solche Ausgestaltung wird die Einsetzbarkeit der erfindungsgemäßen Längenmeßvorrichtung erheblich gesteigert. So können zum Beispiel bezüglich einer Maschinenreferenzfläche zwei verschiedene Abstandswerte, zum Beispiel im Bezug auf die erste Referenzfläche und der dieser gegenüberliegenden Seite durch diese Ausgestaltung gemessen werden.

Von Vorteil ist auch, daß das Führungsgehäuse eine Kreuzführung aufweist. Das Führungsgehäuse nimmt zum einen die Taststange auf und erlaubt eine Führung der Taststange an dem Führungsgehäuse. Umgekehrt ist das Führungsgehäuse rechtwinklig zur Längserstreckung der Taststange auf dem Führungsstab beweglich, beides wird durch eine Kreuzführung des Führungsgehäuses sicher geführt und exakt orientiert.

Ein weiterer Vorzug der Erfindung liegt darin, daß die erste und zweite Aufstellfläche orthogonal, bevorzugt rechtwinklig zueinander orientiert sind und der Meßfühler in einer Ebene beweglich gelagert und geführt ist, die orthogonal, bevorzugt rechtwinklig zu der ersten und der zweiten Aufstellfläche ist. Eine solche Ausgestaltung ist zum Beispiel in Fig. 7 oder in Fig. 11, 12 im Einsatz gezeigt. Durch die Beweglichkeit des Meßfühlers in einer Ebene, die zumindest orthogonal, bevorzugt rechtwinklig zu einer oder beiden der Aufstellflächen ist, wird erreicht, daß ein entsprechendes Einmessen des Werkzeuges möglich ist. Die jeweilige Position in der Ebene, bevorzugt zum Beispiel in der X-Z-Ebene, wird durch entsprechende Meßsensoren, die bevorzugt im Führungsgehäuse angeordnet sind, ermittelt und über die vorgesehene Schnittstelle in die Steuerung der Maschine eingespeist.

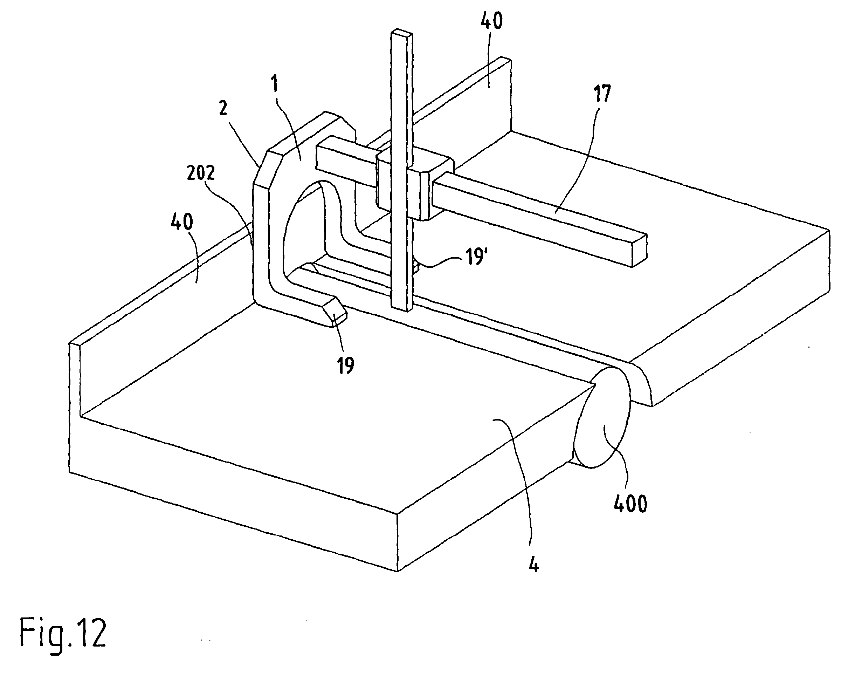

Die erfindungsgemäße Anordnung ist dabei so ausgeprägt, daß durch ein geändertes Anlegen der ersten und zweiten Anstellfläche an die erste und zweite Maschinenreferenzfläche, zum Beispiel derart, daß die erste Anstellfläche an der zweiten Maschinenreferenzfläche anliegt, ein weiteres, insbesonderes anders orientiertes Werkzeug vermeßbar ist. Dieser erfindungsgemäße Vorzug wird bei einem Vergleich der Fig. 11 und 12 deutlich. Bei der ersten Variante wird der kurze Schenkel des L's an der vertikal orientierten Maschinenreferenzfläche angelegt, in der anderen Stellung wird die Position gewechselt. Es ist klar ersichtlich, daß bei der ersten Variante ein vertikal orientiertes Werkzeug und bei der zweiten ein horizontal orientiertes Werkzeug vermeßbar ist. Dabei ist zu beachten, daß das ganze Vermessen mit ein und derselben, erfindungsgemäßen Längenmeßvorrichtung möglich ist.

Entsprechend einer vorteilhaften Weiterbildung der Erfindung ist es vorgesehen, daß sich die Taststange rechtwinklig zur Aufstellfläche erstreckt bzw. rechtwinklig hierzu beweglich ist. Damit ist es gegeben, daß man mittels dieser Taststange bzw. eines an der Taststange sich befindenden Meßfühlers, die zahlreichen möglichen Werkzeugreferenzpunkte erreicht. Dies sind beispielsweise die tiefsten Punkte in einer schmalen Nut oder dergleichen.

Ein weiterer Aspekt der Erfindung ist dadurch angegeben, daß die Meßeinrichtung in dem Führungsgehäuse vorgesehen ist und die relative Position der Taststange und/oder eines Meßfühlers zum Führungsgehäuse und/oder die Position des Führungsgehäuses auf dem Führungsstab misst. Diese Anordnung ist sehr vorteilhaft, da dadurch Taststange, Meßfühler und Führungsgehäuse in einem relativ begrenzten Raum unterzubringen sind und der Platzbedarf dafür sehr gering gehalten werden kann. Im weiteren werden Fehler durch die Übertragung von Meßwerten bzw. Signalen dadurch minimiert, da die Übertragungsstrecken dafür sehr kurz gehalten werden können.

Von Vorteil ist es auch, wenn die Längenmeßvorrichtung für Messungen vertikal bzw. rechtwinklig zur Maschinenreferenzfläche mittels der Aufstellfläche und der Stützfläche auf der Maschinenreferenzfläche einlegbar ist. Das Aufstellen auf beiden Flächen führt zu einer exakten und sicheren Positionierung der Vorrichtung.

Hierbei ist es von besonderem Vorteil, wenn die Aufstellfläche und die Stützfläche in einer gemeinsamen Ebene liegen. Dadurch wird neben der sicheren und genauen Aufstellung auf der Maschinenreferenzfläche ermöglicht, daß Meßfehler durch ungenaue Aufstellung bzw. Handhabung der Längenmeßvorrichtung vermieden werden.

Entsprechend einer vorteilhaften Weiterbildung der Erfindung ist es vorgesehen, daß an dem Stützkörper wenigstens eine Positionierfläche vorgesehen ist und diese Positionierfläche rechtwinklig zur Stützfläche orientiert ist. Diese Ausführungsform ermöglicht auch Messungen, bei denen die Längenmeßvorrichtung im wesentlichen waagerecht orientiert auf der Maschinenreferenzfläche auf dieser Positionierfläche aufgelegt wird, um in dieser Meßart Messungen gewünschter horizontaler Maße parallel zum Maschinentisch durchzuführen.

Eine Weiterbildung der zuvor beschriebenen Ausführungsform der erfindungsgemäßen Längenmeßvorrichtung zeichnet sich demnach dadurch aus, daß der Meßfühler durch eine wippenartige Auflage der Positionierfläche auf einer ersten Maschinenreferenzfläche, zum Beispiel auf dem Maschinentisch der Bearbeitungsmaschine in paralleler Meßart über der ersten Maschinenreferenzfläche innerhalb des durch die als Schenkel der Wippe wirkenden Schwenkbereiches des Grundkörpers bzw. des Führungsgehäuses frei positionierbar ist und die Aufstellfläche und/oder die Stützfläche an einer zweiten Maschinenreferenzfläche anliegen.

Erfindungsgemäß wurde gefunden, daß es sehr vorteilhaft ist, wenn die Aufstellfläche und/oder die Stützfläche und/oder die Positionierfläche schneiden- oder kantenartig ausgebildet sind. Diese Ausbildung der Aufstellfläche, Stützfläche und Positionierfläche führt dazu, daß Meßfehler bzw. Einstellfehler durch auf der Maschinenreferenzfläche aufliegenden Verschmutzungen, wie Späne, Staub und dergleichen, vermieden werden.

Die Genauigkeit der Auflage der jeweiligen Fläche auf der Maschinenreferenzfläche kann noch dadurch verbessert werden, daß die Aufstellfläche, die Stützfläche und die Positionierfläche punktartige Auflagen zur Positionierung besitzen. Damit wird eine punktartige Auflage auf der Maschinenreferenzfläche erreicht, wodurch sich die gesamte Längenmeßvorrichtung insgesamt einfacher und genauer positionieren lässt. Die Bedienungsperson muß dabei nicht auf eine absolute Staub- bzw. Spänefreiheit der Maschinenreferenzfläche achten, da durch die punktartige Auflage der jeweiligen Flächen dies im wesentlichen automatisch erfolgt.

Erfindungsgemäß ist es weiterhin vorgesehen, daß wenigstens ein Taster für die zu messenden Werte vorgesehen ist, der die Freigabe der soeben gemessenen Werte an die Steuerung ermöglicht. Die Erfindung ist dabei nicht auf einen Taster eingeschränkt. Hier können beispielsweise zwei Taster vorgesehen sein, wobei einer beispielsweise die vertikale Höhe und ein anderer die horizontale Tiefe der Steuerung mitteilt. Mit den Tastern wird ebenfalls die Messung des entsprechenden Parameters bestätigt und damit der Wert in die Maschinensteuerung übernommen. Von Vorteil ist es dabei, wenn Anzeigen vorgesehen sind, die eine erfolgreiche Übernahme der Werte von der Steuerung bestätigen. Dies können beispielsweise Leuchtanzeigen (LED) oder dergleichen sein. Mit der Erfindung ist auch vorgesehen, daß ein Freigabetaster jeweils den jeweiligen Meßfühler zugeordnet ist. Es ist zum Beispiel vorgesehen, daß eine Taststange endseitig je einen Meßfühler aufweist. Für jeden dieser beiden Meßfühler ist dann ein eigener Satz von Freigabetastern, zum Beispiel zuzüglich einer oder zwei Dimensionen, vorgesehen.

Die Meßeinrichtung kann nach der Erfindung als Meßelektronik ausgebildet sein. Hierbei ist die Erfindung nicht auf eine Ausführung eingeschränkt. So können neben den bereits beschriebenen Tastern mikroelektronische Meßeinrichtungen, einfache Potentiometererfassungen der Längenänderung, Magnet-Meßsysteme, optische oder optisch-elektronische Meßanordnungen eingesetzt werden.

Vorteilhafterweise ist in der Meßelektronik der Längenmeßvorrichtung eine Schnittstelle zur Steuerung vorgesehen. Über diese Schnittstelle werden die ermittelten Meßwerte zur Steuerung übertragen, wodurch eine fehlerfreie Übergabe bzw. Übernahme der Meßwerte durch die Steuerung jetzt gegeben ist. Die Fehlerquote wird dadurch theoretisch gänzlich gegen Null gebracht, was insbesondere im Bereich der Einstellung und Wartung zu erheblichen Zeiteinsparungen führt. Dadurch wird auch Ausschuß vermieden, der gegebenenfalls durch eine fehlerhafte Einstellung bei Lösungen nach dem Stand der Technik noch vorhanden ist.

Die Übertragung der gemessenen Werte erfolgt entsprechend einer Weiterbildung der Erfindung durch Mittel, wie beispielsweise Funk, Infrarot, Ultraschall oder auch drahtgebunden.

Eine Ausführungform der zuvor beschriebenen Längenmeßvorrichtung zeichnet sich dadurch aus, daß eine Anzeige für die gemessenen Werte an der Längenmeßvorrichtung selbst vorgesehen ist. Dadurch erhöht sich der Komfort für die Bedienungsperson, da diese jeweils die Werte angezeigt bekommt und außerdem sicher ist, daß die Steuerung diese Werte auch mitgeteilt bekam. Zum Beispiel ist vorgesehen, daß richtig an die Steuerung übermittelte Meßwerte durch ein optisches oder akustisches Signal quittiert werden. Des weiteren kann über diese Anzeige die jeweils durchzuführende Messung bzw. Einstellung über die Steuerung vorgegeben und angezeigt werden.

Selbstverständlich ist es nach der Erfindung auch möglich, daß eine Anzeige an der Steuerung vorgesehen ist, die die gemessenen Werte über die Steuerung anzeigt. Diese Ausführungsform ist etwas preisgünstiger, da die Steuerungen an Bearbeitungsmaschinen in der Regel mit solchen Anzeigen bereits ausgestattet sind. Es ist daher möglich, die Längenmeßvorrichtung auch einfacher auszuführen, indem beispielsweise an der Längenmeßvorrichtung selbst lediglich Anzeigesignale wie LED's oder dergleichen vorgesehen sind, die zum einen die Übernahme der Steuerung anzeigen und zum anderen die sichere Übertragung der gemessenen Werte an die Steuerung.

Selbstverständlich ist auch eine Lösung mit Anzeigen an Steuerung und Längenmeßvorrichtung möglich.

Von besonderem Vorteil ist es, wenn die durch die Längenmeßvorrichtung gemessenen Werte permanent an die Steuerung übertragen und angezeigt werden. Dies ermöglicht der Bedienperson eine Kontrolle und gegebenenfalls auch eine Korrektur, falls erforderlich.

Eine Weiterbildung der erfindungsgemäßen Längenmeßvorrichtung zeichnet sich dadurch aus, daß die Steuerung und/oder die Meßelektronik eine Funktion zum Finden des größten und/oder kleinsten Wertes aufweist und diese Werte jeweils durch Signale anzeigt. Auch diese Ausführungsform dient der weiteren Erhöhung der Einstellsicherheit und des Komforts der Längenmeßvorrichtung.

Da die Meßvorrichtung nicht auf vertikale Messungen im Bezug auf die Maschinenreferenzfläche eingeschränkt ist, ist es entsprechend einer vorteilhaften Weiterentwicklung der Erfindung vorgesehen, daß wenigstens ein Lagesensor vorgesehen ist, der die jeweilige Lage der Vorrichtung erkennt und an die Steuerung übermittelt. Sinn des Lagesensors ist beispielsweise die automatische Erkennung von horizontaler oder vertikaler Stellung und entsprechende Maßübergabe bzw. Zuordnung an die Steuerung ohne explizite Auswahl der Funktion. Damit kann die Steuerung der Bedienperson beispielsweise auch anzeigen, daß die derzeitige Lage der Längenmeßvorrichtung für die jeweilige Meßart gerade geeignet oder nicht geeignet ist. Dies kann entsprechend einer Ausbildung der Erfindung dadurch angegeben sein, daß durch die Steuerung eine bestimmte Einstellungsfolge der jeweiligen Werte vorgegeben wird und die Bedienperson beispielsweise für die gerade durchzuführende Einstellung die Längenmeßvorrichtung falsch positioniert hat. Der Lagesensor erkennt dann, daß sich die Längenmeßvorrichtung gerade nicht in der notwendigen Lage befindet und teilt dies über Signale beispielsweise der Bedienperson mit.

Demzufolge ist entsprechend einer Ausführungsform der Erfindung an der Vorrichtung bzw. an dem Führungsgehäuse wenigstens eine Signaleinrichtung vorgesehen, die anzeigt, daß der oder die gemessenen Werte von der Steuerung übernommen wurden und daß die gerade gewählte Lage der Längenmeßvorrichtung für die jeweilige Einstellung korrekt bzw. nicht korrekt ist.

Die Aufstellfläche des Grundkörpers weist entsprechend einer vorteilhaften Weiterbildung der Erfindung die gleiche Breite auf wie der Grundkörper. Sie ist beispielsweise direkt an dem Grundkörper als Aufstellfläche geformt bzw. läuft zu der Aufstellfläche in der gleichen Breite aus wie der Grundkörper.

Erfindungsgemäß wurde auch gefunden, daß es von Vorteil ist, wenn der Grundkörper zumindest abschnittsweise als Griff ausgebildet ist. Hierbei ist eine Ausführungsform des gesamten Grundkörpers gewählt, die eine sichere und leichte Handhabung der gesamten Längenmeßvorrichtung ermöglicht. Es kann dabei der gesamte gebogene Abschnitt des Grundkörpers als Griff ausgebildet sein. Es ist jedoch auch möglich, bei einer etwas aufwendigeren Ausführungsform den Griff mit Griffmulden oder dergleichen auszustatten, um die Bedienungssicherheit und den Bedienungskomfort weiter zu erhöhen. Die Erfindung bevorzugt dabei auch griffgünstige oder ergonomisch günstige Ausbildungen des Grundkörpers insgesamt.

Eine Weiterbildung der Erfindung zeichnet sich dadurch aus, daß der an der Taststange angeordnete Meßfühler mehrere, gegebenenfalls auch unterschiedlich ausgestaltete Fühlerspitzen aufweist. Dadurch ist es durch die Wahl der jeweiligen unterschiedlich gestalteten Fühlerspitzen möglich, verschiedenste Werkzeugreferenzpunkte bzw. Meßpunkte am Werkzeug zu erreichen.

Die Fühlerspitzen sind dabei von gleicher Dicke und in einer Ebene insbesondere drehbar angeordnet. Die Ausführungform der gleichen Dicke ermöglicht, daß sich jeweils die Meßreferenzpunkte in einer Ebene befinden, egal ob man die Fühlerspitze mit ihrer oberen bzw. unteren Fläche im Bezug auf die Maschinenreferenzfläche an dem Bearbeitungswerkzeug positioniert. Besonders vorteilhaft ist es dabei, wenn die Fühlerspitzen drehbar angeordnet sind.

Der Meßfühler ist entsprechend einer Weiterbilung der Erfindung in Axialrichtung zur Taststange beweglich ausgebildet. Hierdurch wird erreicht, daß bei der Positionierung der Taststange bzw. des Meßfühlers immer der gleiche Abstand der Taststange zum Führungsgehäuse gegeben ist, um eine Eingabe eines Korrekturmaßes zu vermeiden. Der axiale Bewegungsspielraum des Meßfühlers auf bzw. in der Taststange entspricht dabei exakt der Dicke der Fühlerspitzen, so daß tatsächlich immer der gleiche Anlagepunkt - egal ob mit der oberen oder unteren Fläche angelegt wird - gegeben ist.

Eine Weiterbildung der zuvor beschriebenen Lösungen zeichnet sich dadurch aus, daß die Fühlerspitzen mit breiter Anlagefläche, mit schmaler Anlagefläche oder mit Doppelspitzen ausgeführt sind. Dies ermöglicht, unterschiedlichste Referenzpunkte anzusteuern und die Fühlerspitzen dort anzulegen. Es ist erfindungsgemäß auch vorgesehen, daß zwei flächig ausgebildete Fühlerspitzen vorgesehen sind, die durch einen schmaler ausgebildeten Steg miteinander verbunden sind. Auch diese Fühlerspitzen sind vorteilhafterweise in einer Ebene insbesondere drehbar angeordnet und zeichnen sich ebenfalls durch eine gleiche Dicke aus. Selbstverständlich ist auch in dieser Ausführungsform der Bewegungsspielraum axial mit Bezug auf die Taststange - wie zuvor beschrieben - gegeben. Dabei ist gemäß einer Ausführungsform der Erfindung an der der Taststange abgewandten Seite eine Schneide vorgesehen, mit der konvexe oder konkave Werkzeugkonturen angetastet werden können.

Die Erfindung betrifft auch eine Holz- oder Künststoffbearbeitungsmaschine mit einer Steuerung für die Werkzeugpositionierung und einer Längenmeßvorrichtung nach einer der zuvor beschriebenen Ausführungsformen zur Ermittlung und Einstellung der Lage von Werkzeuge, wobei die Längenmeßvorrichtung die gemessenen Werte an die Steuerung überträgt, diese Werte anzeigt und über die Steuerung die Position der Werkzeuge entsprechend korrigiert bzw. einstellbar ist. Eine derartige Holz- oder Kunststoffbearbeitungsmaschine ermöglicht jetzt die genaue Einstellung des Bearbeitungswerkzeuges, ohne unbequeme und fehleranfällige manuelle Eingaben an der Maschinensteuerung selbst. Auch werden durch diese Ausführungsform der Erfindung Fehler der Bedienperson eliminiert, so daß insgesamt eine sehr sichere komfortable Einstellmöglichkeit für die Bearbeitungswerkzeuge jetzt angegeben ist.

In der Steuerung können gemäß einer vorteilhaften Weiterbildung der Erfindung Einstellmuster für die Einstellung von verschiedenen Werkstückmaßen hinterlegt sein. Dies erhöht den Komfort der Holz- und Kunststoffbearbeitungsmaschine insgesamt noch mehr, da dadurch ermöglicht ist, daß die Steuerung dem Bediener über die Anzeige anzeigt, welches Maß mittels der Meßvorrichtung insbesondere wie zu ermitteln bzw. einzustellen ist. Sinn des Einstellmusters ist es demnach, daß die Steuerung bei ihr bekannten Sollwerten die Anweisung erteilt, genau definierte Istwerte mit Hilfe der Längenmeßvorrichtung zu ermitteln und danach automatisch und exakt die Sollposition anfahren kann. Damit werden weitere Fehlerquellen eliminiert. Dies ist ein erheblicher Vorteil gegenüber den Lösungen nach dem Stand der Technik und ermöglicht auch unterschiedliche Vorgehensweisen. Zum einen ist ein händisches Messen durchaus weiter angegeben, wobei die Steuerung die jeweiligen Meßergebnisse übernimmt. Es ist jedoch auch möglich, die Steuerung so einzustellen, daß automatisch von der Steuerung der Wert eingegeben wird und der jeweilige Wert über die Längenmeßvorrichtung automatisch eingestellt wird. Dieser automatische Kalibrierungsvorgang ist dabei von besonderem Vorteil und trägt zur Vermeidung jeglicher Fehlerquellen bei.

Deshalb ist es entsprechend einer vorteilhaften Weiterbildung vorgesehen, daß die Steuerung derart ausgebildet ist, daß die nach Vorgabe der Steuerung ermittelten Werte der Längenmeßvorrichtung automatisch in der Steuerung übernehmbar bzw. verarbeitbar sind.

Damit ist eine weitere vorteilhafte Anwendung der Längenmeßvorrichtung und der Bearbeitungsmaschine selbst angegeben Die beschriebenen Einstellmuster werden beispielsweise im Prozeß der Arbeitsvorbereitung abgestimmt, auf den Arbeitsschritt entworfen und bereits mit Soll-Werten versehen. Ein Einstellmuster ist dabei vorteilhafterweise graphisch ausgeführt und beschreibt die Soll-Werkzeugposition und die durchzuführenden Meßschritte und Meßpositionen. Ist der Maschinensteuerung das Einstellmuster bekannt, kann dieses nicht nur graphisch an der Steuerung angezeigt werden, sondern die Maschinensteuerung kann ohne Eingabe von numerischen Werten die korrekte Einstellung der Achsen vornehmen. Dazu verwendet die Steuerung die gemäß Einstellmuster mit der Längenmeßvorrichtung gemessenen Referenzwerte.

In einer Variante der erfindungsgemäßen Bearbeitungsmaschine ist vorgesehen, daß eine Anzeige der Steuerung die von der Längenmeßvorrichtung gemessenen Werte anzeigt. In dieser Variante wird die Anzeige der Steuerung, die bestimmungsgemäß an der Bearbeitungsmaschine vorgesehen ist, von der Längenmeßvorrichtung ausgenützt. Dadurch erspart man sich eine verhältnismäßig aufwendige zusätzliche Anzeige an der Längenmeßvorrichtung selber.

In einer bevorzugten Variante der Erfindung ist vorgesehen, daß außerhalb der Maschine ein Werkzeugeinstellplatz vorgesehen ist und die mit der Maschine verbundene Längenmeßvorrichtung ein auf den Werkzeugeinstellplatz angeordnetes Werkzeug vermisst. Der Werkzeugeinstellplatz ist dabei in einer für die Bearbeitungsmaschine exakt nachvollziehbaren Situation eingestellt und stellt letztendlich ein exaktes Abbild der Situation des eingebauten Werkzeuges in der Bearbeitungsmaschine dar. Die Erfindung eignet sich nun nicht nur dazu, in einer Holzbearbeitungsmaschine oder Kunststoffbearbeitungsmaschine wie beschrieben eingesetzt zu werden, sie kann auch dazu eingesetzt werden, das Werkzeug an einem Werkzeugeinstellplatz entsprechend zu vermessen. Die Vorteile der Variante sind zum einen die gute Zugänglichkeit des Werkzeuges auf dem in der Regel oben offenen Werkzeugeinstellplatz sowie ein Vermessen ohne Maschinenstillstand. Da das Vermessen oftmals eine gewisse Zeit in Anspruch nimmt, würde dies zu Lasten der Maschinenkapazität bzw -effizienz gehen. Die vorgeschlagene erfindungsgemäße Variante vermeidet diesen Maschinenstillstand.

Des Weiteren betrifft die Erfindung nicht nur eine Längenmeßvorrichtung bzw. eine Holzbearbeitungsmaschine wie beschrieben, sondern umfaßt auch ein Verfahren für das Einstellen der Werkzeugmaße in einer Holz- oder Kunststoffbearbeitungsmaschine. Dabei wird das zu vermessende Werkzeug in der Bearbeitungsmaschine oder einem Werkzeugeinstellplatz vorgehalten, eine im Übrigen mobile Längenmeßvorrichtung wird derart an dem Werkzeug positioniert, daß zumindest eine Aufstellfläche der Längenmeßvorrichtung auf einer Maschinenreferenzfläche anlegbar ist, hernach ein Meßfühler oder Meßtaster an das Werkzeug anstellbar ist und durch eine Datenfreigabe der gemessene Wert auf die Steuerung der Maschine übertragen wird. Das erfindungsgemäße Verfahren löst in gleicher Weise die eingangs gestellte Aufgabe. Wichtig für eine ordnungsgemäße Bearbeitung durch die Bearbeitungsmaschine ist es, die jeweiligen Bearbeitungsmaße exakt zu kennen. Üblicherweise wird daher die Längenmeßvorrichtung zum Beispiel an Anschlägen oder an anderen Maschinenreferenzflächen mit eindeutig festliegenden Koordinaten angelegt und bezüglich dieser Flächen das Werkzeug vermessen. Daher kommt es darauf an, daß zunächst die Längenmeßvorrichtung an der jeweils korrespondierenden Maschinenreferenzfläche, es können gegebenenfalls auch mehrere sein, mit der Aufstellfläche (auch da können mehrere zum Einsatz kommen) angelegt wird und danach der Meßfühler an das Werkzeug angestellt wird, bis der Meßfühler das Werkzeug in geeigneter Weise berührt und so dessen Positionswert feststellt. Dieser so ermittelte Wert wird dann nach der Datenfreigabe als gemessener Wert auf die Steuerung der Maschine übertragen und sicher in der Steuerung eingespeichert.

Wesentlicher Vorzug der Erfindung ist, daß die Längenmeßvorrichtung mobil, also autark ist und nur bei Bedarf an der Bearbeitungsmaschine zum Einsatz kommt, im Übrigen aber den rauhen Alltagsgebiet nicht ausgesetzt wird, sondern sicher verwahrt werden kann. Die Mobilität der Längenmeßvorrichtung erlaubt es aber auch, diese zum Beispiel für eine Vielzahl unterschiedlicher Bearbeitungsmaschinen, seien es Sägen oder Hobel bzw. Fräsmaschinen, einzusetzen. Sie wird bei Bedarf einfach nur an die Steuerung entsprechend angeschlossen.

In einer Ausgestaltung der Längenmeßvorrichtung werden dabei ein oder mehrere Werte übertragen. Unter dem gemessenen Wert können sich aber auch mehrere Werte eines Vektors verbergen, um zum Beispiel eine entsprechende Positionsinformation zu übertragen.

Das erfindungsgemäße Verfahren ist dabei sowohl in einer Bearbeitungsmaschine einsetzbar wie auch auf einem Werkzeugeinstellplatz. Sowohl in der Bearbeitungsmaschine wie auch auf dem Werkzeugeinstellplatz wird das zu vermessende Werkzeug vorgehalten, das heißt für die Vermessung entsprechend bereitgehalten. Die Situation ist dabei so gewählt, daß diese exakt der Situation entspricht, wie das Werkzeug auch zum Einsatz kommt, um authentische Werte zu ermitteln. Dies gilt sowohl für das Vermessen des Werkzeuges in der Maschine wie auf dem Werkzeugeinstellplatz.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

Die Erfindung wird nachfolgend anhand von Ausführungsbeispielen und Zeichnungen weiter beschrieben.

Es zeigen:

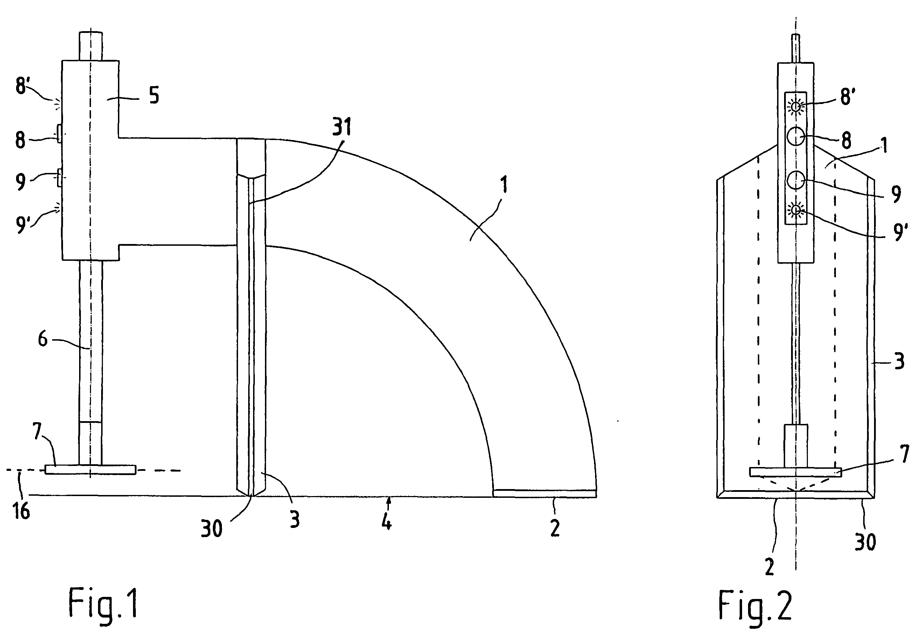

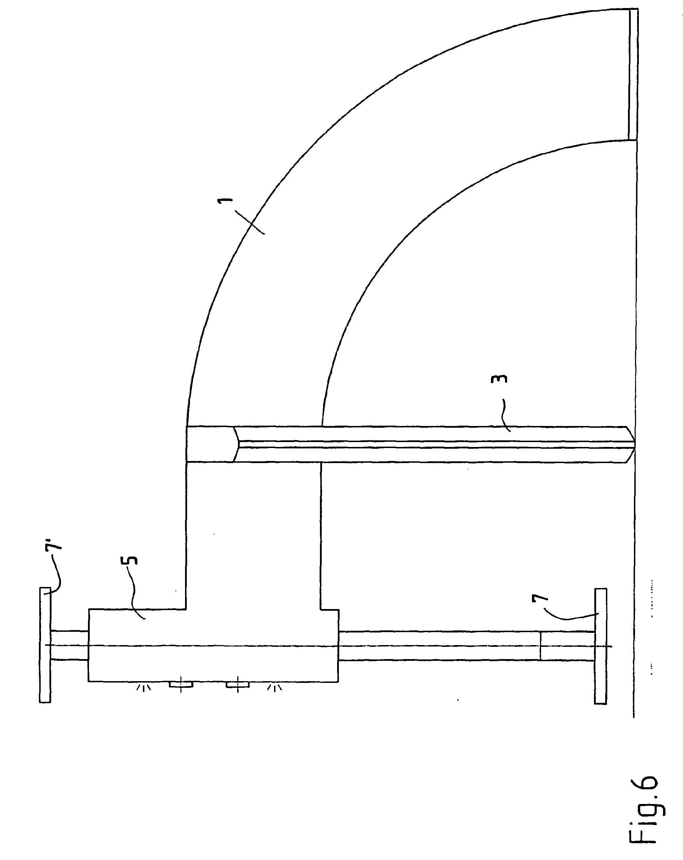

- Fig. 1, 6: Seitenansicht einer Ausführungsform nach der Erfindung für vertikale Messungen,
- Fig. 2:: Vorderansicht der Fig. 1,

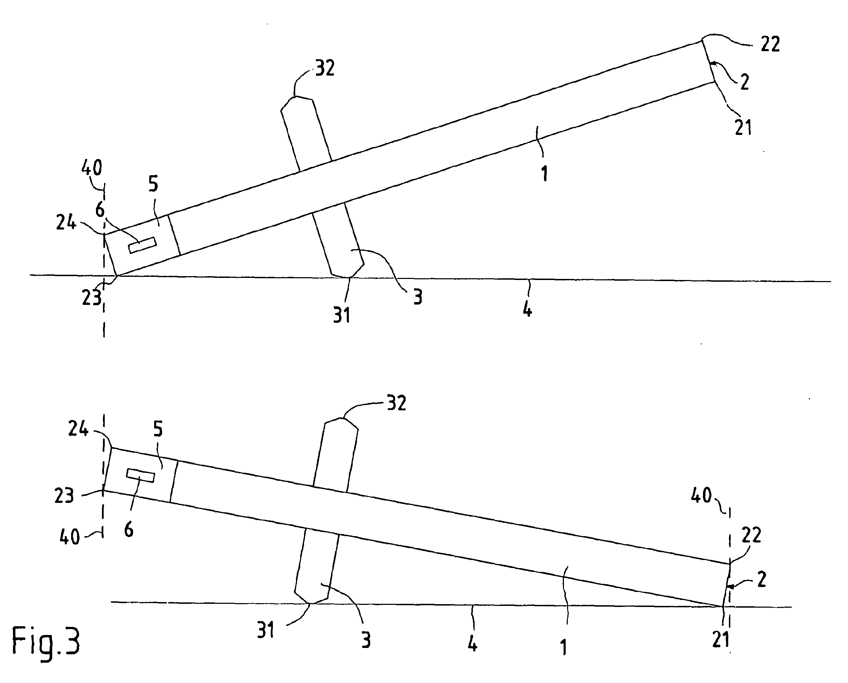

- Fig. 3:: Längenmessvorrichtung nach der Erfindung in liegender Stellung für parallele Messungen,

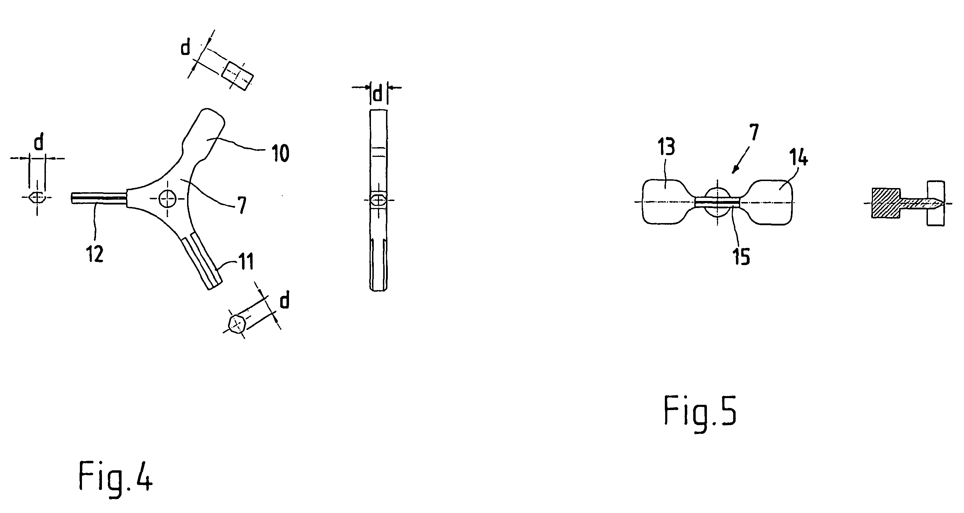

- Fig. 4 und 5:: verschiedene Ausführungsformen von Meßtastern nach der Erfindung,

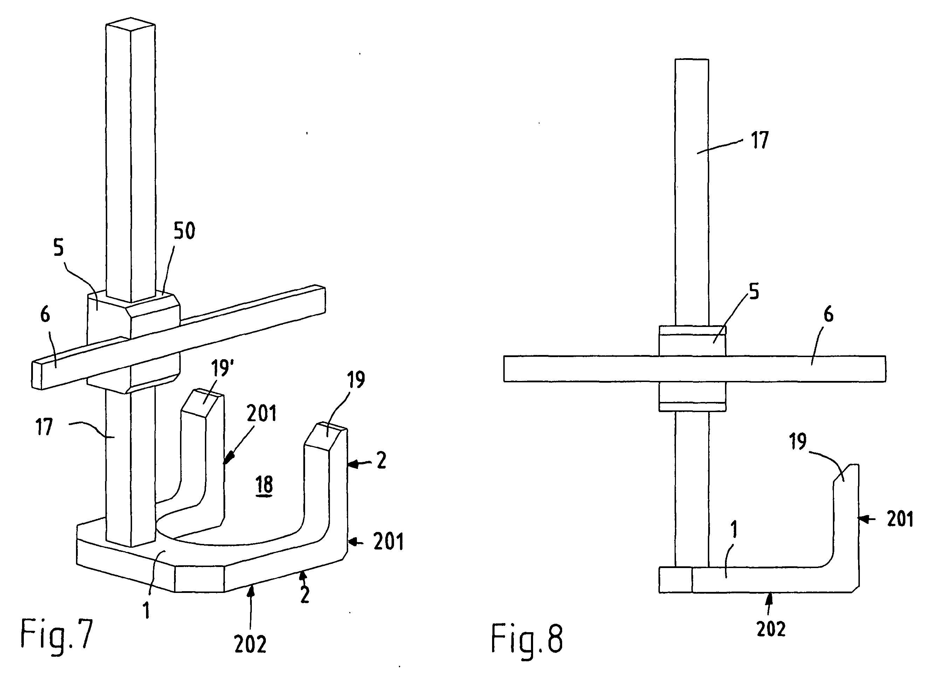

- Fig. 7:: eine dreidimensionale Ansicht eines weiteren Ausführungsbeispieles der erfindungsgemäßen Längenmeßvorrichtung,

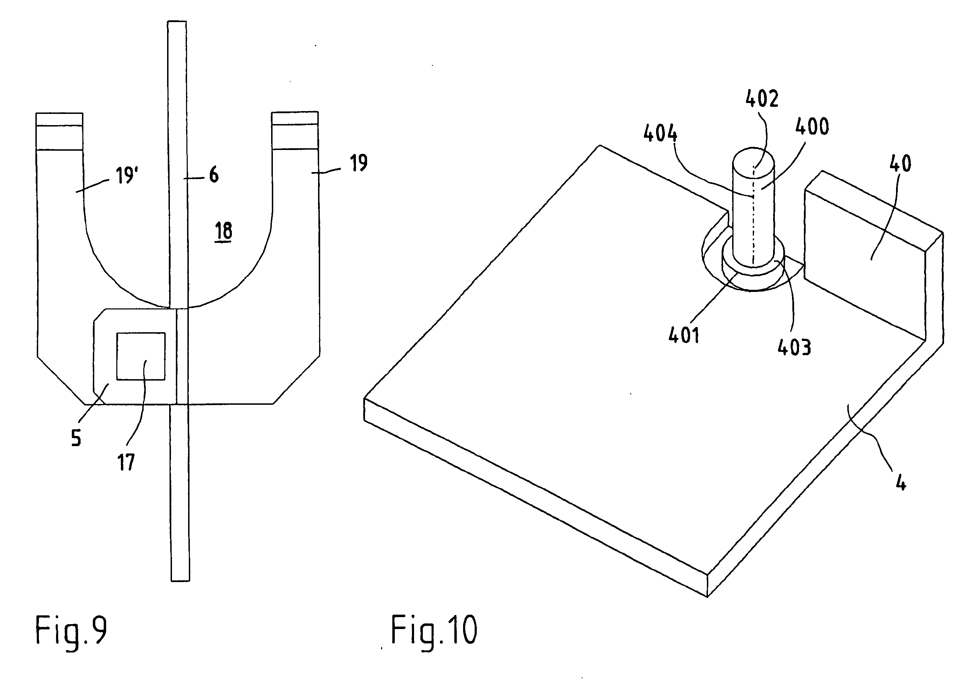

- Fig. 8, 9:: verschiedene Ansichten nach Fig. 7,
- Fig. 10:: ein Werkzeugeinstellplatz in einer dreidimensionalen Ansicht, zur Verwendung mit der erfindungsgemäßen Längenmeßvorrichtung,
- Fig. 11, 12, 13, 14:: je in einer dreidimensionalen Ansicht die Anordnung der erfindungsgemäßen Längenmeßvorrichtung in einer erfindungsgemäßen Holzbearbeitungsmaschine (teilweise gezeigt) in verschiedenen Stellungen.

Die Fig. 1 zeigt eine Seitenansicht einer Ausführungsform der erfindungsgemäßen Längenmeßvorrichtung. Mit dem Bezugszeichen 1 ist der Grundkörper der Längenmeßvorrichtung bezeichnet. Das Bezugszeichen 2 bezeichnet die Aufstellfläche, welche in Bezug auf die Maschinenreferenzfläche 4 rechtwinklig angeordnet ist. Der Grundkörper 1 wird mit der Aufstellfläche 2 auf dieser aufgestellt ist. Der Grundkörper 1 ist rechtwinklig bezogen auf die Aufstellfläche abgebogen und besitzt in der Darstellung gemäß Fig. 1 am Ende des Radius der Biegung einen Stützkörper 3, der mit seiner Stützfläche 30 ebenfalls auf der Maschinenreferenzfläche 4 aufstellbar ist. Der Stützkörper 3 ist dabei wesentlich breiter ausgebildet, als der Grundkörper 1. Dies ist beispielsweise in der Figur 2 deutlich ersichtlich. Dort ist der Grundkörper 1 gestrichelt dargestellt, während der Stützkörper 3 wesentlich breiter ausgebildet ist. Die Zeichnungen sind hierbei nicht als Konstruktionszeichnungen, sondern als schematische Darstellungen zum Verständnis der Erfindung zu verstehen. An dem Stützkörper 3 ist eine Stützfläche 30 vorgesehen. Auf dieser Stützfläche 30 wird die gesamte Längenmeßvorrichtung beispielsweise für eine vertikale bzw. senkrechte Meßlage auf der Maschinenreferenzfläche 4 aufgestellt. Die Stützfläche 30 und die Aufstellfläche 2 weisen jeweils eine Längserstreckung auf, die orthogonal, bevorzugt rechtwinklig zueinander angeordnet sind. Die orthogonale Ausführungsform bezieht sich dabei auf eine nicht ganz rechtwinklige Ausbildung, derart, daß sich die Schnittlinien der beiden Fläche, Stützfläche 30 und Aufstellfläche 2, in einer gedachten Linie schneiden könnten. Bevorzugt ist jedoch die genaue rechtwinklige Anordnung der beiden Flächen zueinander. Mit dem Bezugszeichen 31 ist eine Positionierfläche bezeichnet, die auf der Maschinenreferenzfläche ebenfalls auflegbar ist und zwar für parallel zur Maschinenreferenzfläche orientierte Messungen. Die Vorrichtung ist dabei seitlich um 90° zu schwenken und auf einer der beiden Positionierflächen 31, 32 aufzulegen. Die Positionierflächen 31, 32 sind genau gegenüberliegend angeordnet. Dies wird in einer späteren Ausführungsform anhand der Figur 3 noch näher beschrieben werden. An dem der Aufstellfläche 2 abgewandten Ende des Grundkörpers 1 ist ein Führungsgehäuse 5 angeordnet. In dem Führungsgehäuse 5 ist die Taststange 6 beweglich gelagert und geführt. Am zur Maschinenreferenzfläche weisenden Ende der Taststange 6 ist ein Meßfühler 7 angeordnet. Der Meßfühler 7 kann mehrere in der Figur 1 nicht dargestellte Fühlerspitzen aufweisen. Diese Fühlerspitzen sind gegebenenfalls unterschiedlich ausgebildet und befinden sich in einer Ebene 16, die mit einer gestrichelten Linie schematisch angedeutet ist. Der Meßfühler 7 ist in Axialrichtung zur Taststange 6 beweglich ausgebildet. Das führt dazu, daß für die unterschiedlichen Meßpositionen immer der gleiche Bezugspunkt bzw. die gleiche Bezugsebene automatisch eingestellt wird. Der axiale Bewegungsspielraum entspricht dabei genau der Dicke d der Meßfühler selbst. An dem Führungsgehäuse 5 sind die Taster 8 und 9 dargestellt. Diese Taster 8, 9 teilen der Steuerung die momentan einzustellenden Parameter jeweils mit. In dem Ausführungsbeispiel gemäß der Figur 1 sind zwei Taster 8, 9 vorgesehen, dabei ist der Taster 8 für die vertikale Höhe und der Taster 9 für die horizontale Tiefe bestimmt. Mit den Tastern 8, 9 wird ebenalls die Messung des entsprechenden Parameters bestätigt und der Wert damit in die Maschinensteuerung übernommen. Die Anzeigen 8', 9', welche beispielsweise als LED's ausgebildet sein können, zeigen die erfolgreiche Übernahme der Werte durch die Steuerung an. Die LED's können auch anzeigen, welche Art von Wert (horizontal bzw. vertikal) übertragen wird. Es ist auch möglich, in der Längenmeßvorrichtung einen Lagesensor vorzusehen, der die jeweilige Meßlage der Längenmeßvorrichtung der Steuerung und gegebenenfalls dem Bediener anzeigt.

Die Fig. 2 zeigt die Vorderansicht der erfindungsgemäßen Längenmeßvorrichtung nach Fig. 1. Wie bereits erwähnt, ist der Grundkörper 1 schmaler ausgebildet als der Stützkörper 3. Dies ist mit der gestrichelten Linie bzw. Darstellung des Grundkörpers 1 sehr gut ersichtlich. Die Aufstellfläche 2 ist bezogen auf die Maschinenreferenzfläche 4 schneiden- bzw. kantenartig ausgebildet. Dies ist analog zur Ausführung der Stützfläche 30 zu verstehen, die in ihrer schneiden- bzw. kantenartigen Ausbildung in der Figur 1 besser dargestellt ist.

Ebenfalls aus den Figuren 1 und 2 sehr gut ersichtlich ist, daß die Stützfläche 30 und die Aufstellfläche 2 jeweils in ihrer Längserstreckung orthogonal bevorzugt rechtwinklig zueinander angeordnet sind. Die anderen Bezugszeichen wurden bei der Beschreibung der Figur 1 bereits vorgestellt, so daß dies nicht noch einmal wiederholt wird.

Die Fig. 3 zeigt die erfindungsgemäße Längenmeßvorrichtung in liegender Stellung für parallele Messungen zur Maschinenreferenzfläche 4. Der Meßfühler 7, welcher in der Fig. 3 nicht dargestellt ist, der sich jedoch in Längserstreckung zur Taststange 6 befindet, läßt sich in dieser Meßlage durch eine wippenartige Auflage der Positionierflächen 31, 32 auf der Maschinenreferenzfläche innerhalb des durch die als Schenkel der Wippe wirkenden Schwenkbereiches der Grundkörpers 1 bzw. des Führungsgehäuses 5 frei positionieren. Die Aufstellfläche 2 bzw. die Anlagekanten 21 und 22 lassen sich gemäß dieser Ausführungsform der Erfindung an einer zweiten Maschinenreferenzfläche 40 beispielsweise positionieren bzw. anlegen. Diese zweite Maschinenreferenzfläche 40 ist in der Darstellung gemäß Fig. 3 als gestrichelte Linie dargestellt. Je nach Ausführungsart der Bearbeitungsmaschine ist die zweite Maschinenreferenzfläche dort frei bestimm- bzw. wählbar. Auch ist das Anlegen der Anlegefläche 23 und 24 an eine zweite Maschinenreferenzfläche 40 möglich. Mit dem Bezugszeichen 21 und 22 sind demnach Anlagekanten bezeichnet, die entweder auf der Maschinenreferenzfläche 4 an der zweiten Maschinenreferenzfläche 40 bzw. an einer weiteren nicht dargestellten Maschinenreferenzfläche auf- bzw. anlegbar sind. Die zweite Maschinenreferenzebene kann auch beispielsweise durch einen Anschlag definiert werden, an dem die Längenmeßvorrichtung angelegt wird. Die obere Darstellung veranschaulicht die wippenartige Ausbildung der gesamten Längenmeßvorrichtung, wobei in der oberen Darstellung die Anlagekante 23 als Anlageauflage für das Führungsgehäuse 5 gewählt wurde. In der unteren Darstellung ist die Anlagekante 21 als Auflagekante für den Grundkörper 1 bzw. die Aufstellfläche gewählt worden. Durch die wesentlich breitere Ausführung des Stützkörpers 3 mit seinen Positionierflächen 31 und 32 kann die gesamte Längenmeßvorrichtung in Art einer Wippe auf der Maschinenreferenzfläche 4 aufgelegt werden und es können Messungen parallel zur Maschinenreferenzfläche 4 ausgeführt werden, in dem die Taststange 6 mit dem nicht dargestellten Meßfühler 7 dann an das Bearbeitungswerkzeug herangeführt wird. Der Meßfühler 7 kann dadurch an verschiedenen Referenzpunkten bzw. Flächen des Bearbeitungswerkzeuges angelegt werden, die mittels einer lediglich senkrecht durchzuführenden Meßart nicht erreichbar sind.

In den Figuren 4 und 5 sind verschiedene Ausführungsformen von Meßtastern nach der Erfindung dargestellt, die jeweils an der Taststange 6 befestigbar sind. Die Meßfühler dienen der genauen Positionierung der Taststange 6 an dem Bearbeitungswerkzeug bzw. an den Referenzpunkten des Bearbeitungswerkzeuges selbst.

Der Meßfühler 7 besteht dabei, wie in der Fig. 4 gezeigt, aus mehreren Fühlerspitzen 10, 11, 12, welche gleicher Dicke d sind. Die Meßfühler bzw. Fühlerspitzen 10, 11, 12 sind in einer Ebene angeordnet. Der Meßfühler 7 ist senkrecht zu dieser Ebene (siehe Fig. 1, Bezugsziffer 16) beweglich ausgeführt, wobei der Bewegungsspielraum exakt der Dicke d der Fühlerspitzen entspricht. Dadurch ergibt sich, unabhängig von der Richtung der Antastung an dem zu messenden Werkzeug, stets die gleiche Anlageebene. Dieses Prinzip vermeidet eine rechnerische Korrektur der Antastrichtung. Die erste Fühlerspitze 10 ist dabei als breite Fläche ausgelegt und dient der schnellen und unkomplizierten Antastung an gut zugängliche Punkte des Werkzeuges, insbesondere Spitzen und Ecken. Bei beschränkter Zugänglichkeit wird die zweite Fühlerspitze 11 mit einer schmalen Fläche eingesetzt, die auch auf Werkzeugspitzen und Werkzeugecken immer noch sicher positioniert werden kann. Die dritte Fühlerspitze 12 dient schließlich dem Antasten von konvexen oder konkaven Werkzeugkonturen, wie beispielsweise Radienmessern. Durch ihre Doppelspitzenausführung mit zwei jeweils in der Anlageebene liegenden Schneiden ist die Berührung an einem exakt definierten Punkt sichergestellt. Da diese Fühlerspitze 12 keine Antastfläche besitzt, ist sie aber für Werkzeugspitzen und -ecken nicht geeignet. Um den Bewegungsspielraum um eine der Fühlerspitzen zu erhöhen, kann das hier als gleichseitig gezeichnete Dreieck auch verzerrt werden. Dabei ist es beispielsweise vorgesehen, die schmalen Fühlerspitzen 11, 12 enger zusammenzurücken, um der breiteren Fühlerspitze 10 mehr Bewegungsspielraum zu lassen. Damit wird es erleichtert, das Werkzeug bei anliegender Antastfläche zu drehen, um den höchsten oder niedrigsten Punkt zu finden.

In der Figur 5 ist eine alternative, kostengünstigere Variante des Meßfühlers 7 dargestellt. Hierbei sind zwei flächenförmige Fühlerspitzen 13, 14 gleicher Dicke vorgesehen, die durch einen schmalen Steg 15 miteinander verbunden sind. Auf diesem schmalen Steg sitzt senkrecht zu den Antastflächen die Befestigung zur Taststange 6. Der Meßfühler 7 ist, wie bereits zuvor beschrieben, vertikal um seine Dicke d beweglich. Die flächenförmigen Fühlerspitzen lassen ein Antasten an gut zugänglichen Punkten des Werkzeuges zu. Der schmale Steg 15 dazwischen weist an der zur Taststange 6 abgewandten Seite eine Schneide auf, mit der konvexe oder konkave Werkzeugkonturen angetastet werden können.

Zusammenfassend wird die Funktionsweise nachfolgend nochmals beschrieben. Die Längenmeßvorrichtung wird am Grundkörper 1 sicher gehalten. Dieser Grundkörper 1 kann beispielsweise auch als Griff ausgebildet sein. Der Grundkörper bzw. der Griff läuft in eine Aufstellfläche 2 gleicher Breite aus. Diese Aufstellfläche 2 steht gemeinsam mit dem Stützkörper 3 bzw. dessen Stützfläche 30 auf der Maschinenreferenzfläche 4 auf. Dabei ist es günstig, wie in den Figuren 1 und 2 zu sehen, wenn beide Flächen als Schneide ausgebildet sind, um die Beeinflussung des Meßergebnisses durch Staub und Späne auf der Maschinenreferenzfläche 4 zu minimieren. An der von der Aufstellfläche 2 abgewandten Seite des Grundkörpers 1 ist das Führungsgehäuse 5 angeordnet, welches die Taststange 6 trägt, die wiederum an ihrem Ende einen Meßfühler 7 trägt. Eine Meßelektronik ist vorteilhafterweise im Führungsgehäuse 5 integriert und misst die relative Position der Taststange 6 zum Führungsgehäuse 5. Die zuvor beschriebene Meßstellung eignet sich insbesondere für Werkzeugreferenzpunkte, die in der senkrechten bzw. vertikalen Meßposition mit Hilfe der erfindungsgemäßen Längenmeßvorrichtung erreichbar sind. Die Positionierung der erfindungsgemäßen Längenmeßvorrichtung in Art einer Wippe auf der Maschinenreferenzfläche 4 wurde in Fig. 3 beschrieben. Neuartig an der erfindungsgemäßen Längenmeßvorrichtung ist, daß beide Meßarten, nämlich vertikal und horizontal einer einzigen Meßvorrichtung ausführbar sind. Weiterhin ist es gegenüber dem Stand der Technik sehr von Vorteil, daß die gemessene Position der Taststange und damit auch des Meßfühlers 7 direkt an die Steuerung der Maschine übertragen wird. Dies kann sowohl drahtlos mittels Funk, Infrarot, Ultraschall oder dergleichen, als auch drahtgebunden erfolgen. Wie bereits beschrieben, findet vorzugsweise eine permanente Übertragung statt, da so auf einer Anzeige im Einstellgerät verzichtet werden kann. Stattdessen wird vorzugsweise die vorhandene Anzeige in der Steuerung zur laufenden Meßwertanzeige während des Meßvorganges verwendet. Dies ist beispielsweise notwendig, wenn durch Drehen des Werkzeuges das größte oder das kleinste Maß desselben ermittelt werden soll. Alternativ kann diese Funktion (Finden des grössten oder kleinsten Maßes) auch durch die Elektronik des Einstellgerätes oder durch die Maschinensteuerung gelöst werden. Diese hält beispielsweise den größten oder kleinsten übertragenen Meßwert und gibt ein entsprechendes Signal an den Benutzer.

Im Vergleich zu Fig. 1 zeigt Fig. 6 eine Ergänzung. Wie in Fig. 1 trägt die Taststange 6 an ihrem unteren Ende einen Meßfühler 7. In dem in Fig. 6 gezeigten Beispiel ist ein zweiter Meßfühler 7'am oberen Ende der Taststange angeordnet.

Mit diesem zweiten Meßfühler, der sich oberhalb des Führungsgehäuses 5 befindet, kann ausgehend von der Referenzfläche ein Längenmaß nach oben, beispielsweise zu einer darüber liegenden Welle oder Werkzeug, bestimmt werden.

Die Auswahl des Meßpunktes wird dabei durch einen zusätzlichen Freigabetaster der Steuerung mitgeteilt.

In den Fig. 7, 8 und 9 ist eine zweite erfindungsgemäße Ausgestaltung der Längenmeßvorrichtung gezeigt. Auch diese Variante der Längenmeßvorrichtung besteht aus einem Grundkörper 1. Im unteren Bereich ist an dem Grundkörper 1 eine Aufstellfläche 2 vorgesehen.

Es ist gut zu erkennen, daß der Grundkörper 1 gabelartig in zwei Anstellschuhe 19, 19' aufgeteilt ist.

Dazwischen ergibt sich ein Freiraum 18, der insbesondere zur Aufnahme eines Werkzeuges, zum Beispiel einer Hobelwelle (vergleiche Fig. 11) dient.

In der Draufsicht (Fig. 9) ist gut zu erkennen, daß der Grundkörper 1 im Wesentlichen U-förmig ausgebildet ist und die beiden Schenkel des U's die Anstellschuhe 19, 19' bilden.

In der Seitenansicht nach Fig. 8 ist die L-artige Ausgestaltung des Anstellschuhes 19 gut zu erkennen. Wesentlich bei dieser Ausgestaltung ist, daß diese Variante zwei Aufstellflächen 201, 202 besitzt, die rechtwinklig zueinander orientiert sind. Deren Verwendung wird zum Beispiel in Fig. 11 bzw. 12 deutlich werden.

Diese gabelartige oder klauenartige Ausgestaltung des Grundkörpers 1 weist in dem Verbindungsbereich, dem Anstellschuh 19 abgelegenen Ende, eine Aufnahme auf, an der sich rechtwinklig zu der Aufstellfläche 2 ein Führungsstab 17 nach oben erstreckt.

Dieser Führungsstab 17 trägt das Führungsgehäuse 5, wobei die Ausbildung hier so gewählt ist, daß das Führungsgehäuse 5 hier beweglich auf dem Führungsstab 17 ist. Rechtwinklig hierzu hält das Führungsgehäuse 5 die Taststange 6, wobei die Taststange 6 wiederum endseitig die hier nicht gezeigten Meßfühler trägt.

Das Führungsgehäuse 5 ist in Form einer Kreuzführung 50 ausgebildet. Dadurch ist es möglich, daß die endseitig angeordneten Meßfühler in einer Ebene bewegbar und natürlich entsprechend an einem Werkzeug anstellbar sind. Die Ebene ist durch die Freiheitsgrade in der Kreuzführung definiert, sie sind in diesem Beispiel so gewählt, daß die Ebene jeweils senkrecht auf den beiden Aufstellflächen 201, 202 sind, die jeweils rechtwinklig zueinander orientiert sind. Natürlich führt auch eine orthogonale Anordnung ebenfalls zum Ziel, bei der Umrechnung müssen entsprechend die trigonometrischen Funktionen berücksichtigt werden.

In dem Führungsgehäuse 5 ist die Meßelektronik integriert. Es sind Positionssensoren vorgesehen, die den jeweiligen Abstand zu den Maschinenreferenzflächen 4, 40 (beziehungsweise zu den jeweiligen Aufstellflächen 201, 202) ermitteln. So werden die Positionsdaten in einer (X-Z) Ebene ermittelt.

In Fig. 10 ist der Werkzeugeinstellplatz gezeigt. Dieser Einstellplatz ist von der Holzbearbeitungsmaschine getrennt ausgeführt und behindert die Bearbeitung nicht.

Das zu vermessende Werkzeug 400 wird dabei auf einen drehbaren Dorn 402 aufgesetzt und liegt am unteren Bund 401 an.

Die horizontal verlaufende erste Referenzfläche 4 fluchtet dabei mit der ringartigen Bundfläche 403.

Rechtwinklig zu der ersten Maschinenreferenzfläche 4 ist eine zweite Maschinenreferenzfläche 40 vorgesehen. Sie könnte zum Beispiel als Anschlag dienen. Die Mittelachse 404 des Dornes 402 fluchtet dabei mit der Maschinenreferenzfläche 40.

Diese typischen Einstellwerte, nämlich ringartige Bundfläche 403 zur ersten Maschinenreferenzfläche 4 und Lage der Mittelachse 404 zur zweiten Maschinenreferenzfläche 40 sind natürlich bekannt und entsprechend in der Bearbeitungsmaschine übertragbar. Die erfindungsgemäße Längenmeßvorrichtung wird nun auf der ersten Maschinenreferenzfläche 4 aufgelegt und an die zweite Referenzfläche 40 angestellt, derart, daß die Meßfühler das Werkzeug 400 zu vermessen vermögen. Die hierdurch ermittelten Meßdaten werden drahtgebunden oder durch Ultraschall, Funk usw. in die Steuerung der Maschine eingespeist.

Die Abbildungsserie von Fig. 11 bis 14 zeigt den Einsatz der erfindungsgemäßen Längenmeßvorrichtung, zum Beispiel in einer Vierseitenhobelmaschine.

In Fig. 11 wird das in Förderrichtung rechts liegende, um eine vertikale Achse laufende, Werkzeug 400 vermessen. Die zweite Aufstellfläche 202 liegt auf der Maschinenreferenzfläche 4 des horizontal orientierten Tisch auf, die erste Aufstellfläche 201 liegt an der zweiten Maschinenreferenzfläche 40, zum Beispiel einem vertikal orientierten Anschlag an.

Der Freiraum 18 korrespondiert mit dem Ausschnitt im Anschlag und liegt in Opposition zu dem Werkstück 400. Die Meßtaste 6 ist durch die Kreuzführung 50 des Führungsgehäuses 5 entsprechend an das Werkzeug 400 heranpositionierbar. In diesem Fall wird der (nicht gezeigte) Meßfühler auf der rechten Seite verwendet.

In Fig. 12 wird ebenfalls der an dem rechten Ende der Taststange 6 angesetzte Meßfühler eingesetzt. Allerdings ist in diesem Ausführungsbeispiel das Werkzeug 400 ein liegendes, um eine horizontale Achse rotierendes Werkzeug. Die gleiche Vorrichtung wie in Fig. 11 wird jetzt derart verwendet, daß eine andere Zuordnung der Anstellflächen 2, 201, 202 bezüglich der Maschinenreferenzflächen 4, 40 gewählt wird. In diesem Fall ist der kurze Schenkel des L-artig ausgebildeten Austellschuhes 19 auf den Maschinentisch 4 aufliegend, derart, daß die Anstellfläche auf der Maschinenreferenzfläche 4 aufliegt. Die zweite Anstellfläche 202, die an ihrem Ende ja die Führungsstange 17 trägt, bewirkt zusammen mit den Seiten der Maschinenreferenzfläche 40 zum Beispiel einen Anschlag. Auch in diesem Beispiel ist eine zweidimensionale Positionsbestimmung möglich. Geschickterweise führt die gabelartige Ausgestaltung der Ausstellschuhe 19, 19' dazu, daß diese auch nicht bei dieser Anordnung von Bearbeitungswerkzeugen stören.

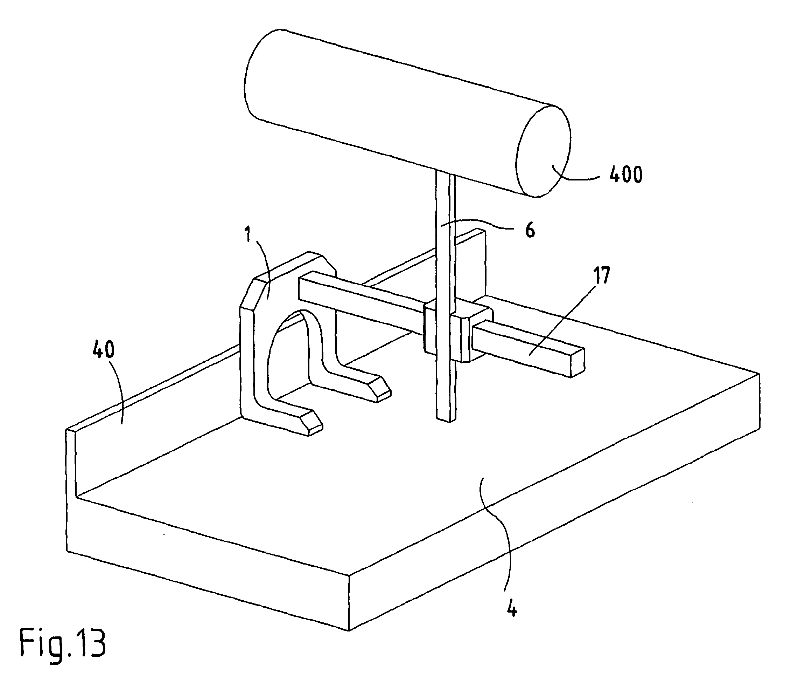

In Fig. 13 wird die zweite horizontale Welle bzw. das horizontal gelagerte Werkzeug 400 vermessen. Dieses Werkzeug befindet sich dabei über dem Maschinentisch bzw. der ersten Maschinenreferenzfläche 4. In dem Beispiel nach Fig. 12 war das Werkzeug in den Tisch eingelassen bzw. versenkt. Im Übrigen ist die Anordnung in gleicher Weise wie in Fig. 12, außer, daß hier nun nicht der rechte Meßfühler, sondern der linke Meßfühler an der Taststange 6 zum Einsatz kommt. Das Zusammenwirken der jeweiligen Anstellflächen 201, 202 mit den Maschinenreferenzflächen 4, 40 ist wie in Fig. 12 ausgeführt.

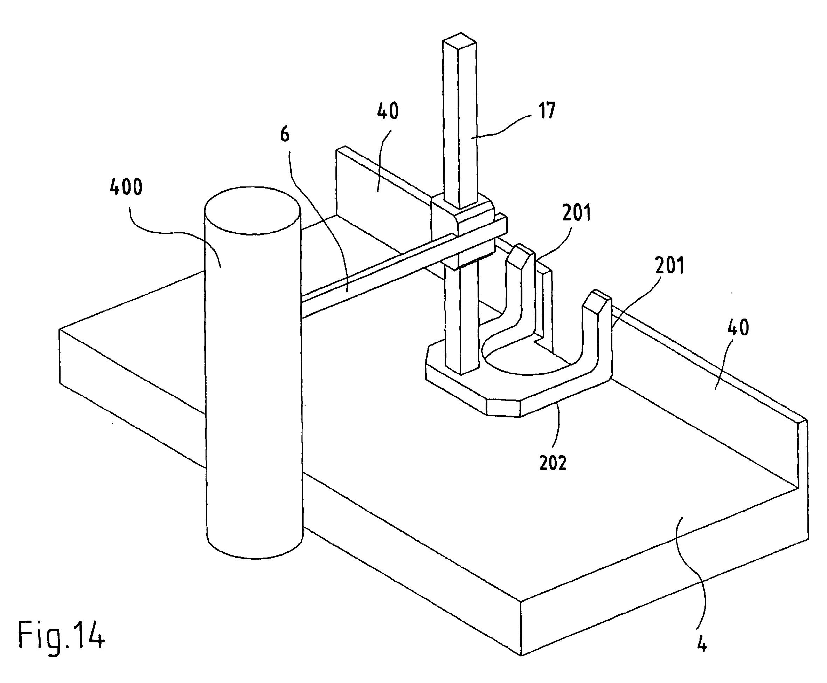

In Fig. 14 wird das zweite, sich um eine vertikale Achse drehende Bearbeitungswerkzeug vermessen. Die Anordnung ist in gleicher Weise ausgeführt wir Fig. 11, nur daß an Stelle des rechten Meßtasters hier der linke Meßtaster zum Einsatz kommt.

In diesem Zusammenhang ist der Begriff Meßtaster oder Meßfühler gleichwertig. wie beschrieben ist vorgesehen, daß an der Taststange endseitig je ein Meßtaster bzw. Meßfühler vorgesehen ist und so die Flexibilität erhöht wird. In dem hier gezeigten Ausführungsbeispiel wird das eindrucksvoll deutlich, da mit ein- und demselben Gerät z. B. alle Bearbeitungswerkzeuge einer Vierseitenhobelmaschine vermessen und eingestellt werden können. Die unmittelbare Verbindung der Meßeinheit der Längenmeßvorrichtung zur Steuerung, zum Beispiel durch drahtgebundene Datenübertragung oder auch drahtungebunden, wie Funk, Ultraschall oder Infrarot erleichtert eine sichere Datenübergabe in die Maschinensteuerung.

## Patentansprüche

1. Längenmeßvorrichtung, die an eine Maschinenreferenzfläche anlegbar ist, insbesondere zur Einstellung von Werkzeugen an Bearbeitungsmaschinen mit einer Steuerung, wobei die Längenmeßvorrichtung eine Meßeinrichtung aufweist und die Längenmeßvorrichtung eine Schnittstelle zur Steuerung einer Bearbeitungsmaschine aufweist, die zur Übertragung der gemessenen Werte an die Steuerung dient und die Längenmeßvorrichtung einen Grundkörper (1) aufweist; der mindestens eine an eine Maschinenreferenzfläche (4) anlegbare Aufstellfläche (2) aufweist, **dadurch gekennzeichnet, dass** der Grundkörper (1) zwei rechtwinklig zueinander orientierte erste und zweite Aufstellflächen (2, 201, 202) aufweist, die an je unterschiedlichen ersten und zweiten Maschinenreferenzflächen (4, 40) anlegbar sind, um mit mindestens einer Maschinenreferenzfläche (4, 40) zusammenzuwirken (2, 201, 202) und ein Stützkörper (3) mit einer Stützfläche (30) vorgesehen ist, die mit wenigstens einer der Maschinenreferenzflächen (4, 40) zusammenwirkt.

2. Längenmeßvorrichtung nach Anspruch 1, **dadurch gekennzeichnet, dass** der Grundkörper einen Führungsstab (17) aufweist und das Führungsgehäuse (5) auf dem Führungsstab (17) verschiebbar gelagert und geführt, gegebenenfalls festlegbar ist.

3. Längenmeßvorrichtung nach einem der vorhergehenden Ansprüche, **dadurch gekennzeichnet, dass** die Aufstellfläche (2) an der Maschinenreferenzfläche (4) anlegbar, insbesondere aufstellbar oder anpreßbar ist und/oder der Grundkörper (1) abgebogen, insbesondere rechtwinklig, bezogen auf die Aufstellfläche (2) ist.

4. Längenmeßvorrichtung nach Anspruch 1, **dadurch gekennzeichnet, dass** der Grundkörper (1) eine von der Kreisbogenform abweichende Form aufweist und/oder der Grundkörper (1) gabelartig in zwei Anstellschuhe (19,19') geteilt ist.

5. Längenmeßvorrichtung nach einem der vorhergehenden Ansprüche, **dadurch gekennzeichnet, dass** der Stützkörper (3) breiter ausgebildet ist als der Grundkörper (1) und/oder Stützfläche (30) und die Aufstellfläche (2) je eine Längserstreckung aufweisen, und die Längserstreckungen der Stützfläche (30) und der Aufstellfläche (2) orthogonal, bevorzugt rechtwinklig zueinander sind.

6. Längenmeßvorrichtung nach einem der vorhergehenden Ansprüche, **dadurch gekennzeichnet, dass** der Grundkörper (1) beziehungsweise der Anstellschuh (19) abgewinkelt ausgebildet ist, zur Ausbildung einer ersten und zweiten Aufstellfläche.

7. Längenmeßvorrichtung nach einem der vorhergehenden Ansprüche, **dadurch gekennzeichnet, dass** ein Führungsgehäuse (5) am Grundkörper (1) beweglich oder fest angeordnet ist und in dem Führungsgehäuse eine einen Messfühler (7) tragende Taststange (6) beweglich gelagert und geführt ist.

8. Längenmeßvorrichtung nach Anspruch 7, **dadurch gekennzeichnet, dass** der Meßfühler (7) am Ende der Taststange (6) angeordnet ist und/oder die Taststange (6) zwei Meßfühler (7,7'), bevorzugt an ihren Enden trägt und/oder das Führungsgehäuse (5) eine Kreuzführung aufweist und/oder die erste und zweite Anstellfläche (201,202) orthogonal, bevorzugt rechtwinklig zueinander orientiert sind und der Meßfühler in einer Ebene beweglich gelagert und geführt ist, die orthogonal, bevorzugt rechtwinklig zu der ersten und der zweiten Aufstellfläche (201,202) ist.

9. Längenmeßvorrichtung nach einem der vorherigen Ansprüche 7 und 8, **dadurch gekennzeichnet, dass** durch ein geändertes Anlegen der ersten und zweiten Aufstellfläche (201,202) an die erste und zweite Maschinenreferenzfläche (4,40) zum Beispiel derart, daß die erste Aufstellfläche (201) an der zweiten Maschinenreferenzfläche (40) anliegt, ein weiteres, insbesondere anders orientiertes Werkzeug vermeßbar ist und/oder der Grundkörper (1) breiter ausgebildet ist als das Führungsgehäuse (5) und/oder sich die Taststange (6) rechtwinklig zur Aufstellfläche (2) erstreckt bzw. rechtwinklig hierzu beweglich ist und/oder die Messeinrichtung in dem Führungsgehäuse (5) vorgesehen ist und die relative Position der Taststange (6) und/oder eines Messfühlers (7) zum Führungsgehäuse (5) und/oder die Position des Führungsgehäuses auf dem Führungsstab mißt und/oder die Längenmeßvorrichtung für Messungen vertikal bzw. rechtwinklig zur Maschinenreferenzfläche (4) mittels der Aufstellfläche (2) und gegebenenfalls der Stützfläche (30) auf der Maschinenreferenzfläche (4) anlegbar ist.

10. Längenmeßvorrichtung nach einem der vorhergehenden Ansprüche, **dadurch gekennzeichnet, dass** die Aufstellfläche (2) und die Stützfläche (30) in einer gemeinsamen Ebene liegen und/oder an dem Stützkörper (3) wenigstens eine Positionierfläche (31, 32) vorgesehen ist und die Positionierfläche (31) rechtwinklig zur Stützfläche (30) orientiert ist und/oder der Meßfühler (7) durch eine wippenartige Auflage der Positionierfläche (31, 32) auf einer ersten Maschinenreferenzfläche (4) in paralleler Meßart über der ersten Maschinenreferenzfläche (4) innerhalb des durch die als Schenkel der Wippe wirkenden Schwenkbereiches des Grundkörpers (1) bzw. des Führungsgehäuses (5) frei positionierbar ist und die Aufstellfläche (2) und/oder die Stützfläche (30) an einer zweiten frei definierbaren Maschinenreferenzfläche (40) bzw. an einem Anschlag anliegen und/oder die Aufstellfläche (2) und/oder die Stützfläche (30) und/oder die Positionierfläche (31/32) schneiden- oder kantenartig ausgebildet sind und/oder die Aufstellfläche (2), die Stützfläche (30) und die Positionierfläche (31, 32) punktartige Auflagen zur Positionierung auf der Maschinenreferenzfläche aufweisen.

11. Längenmeßvorrichtung nach einem der vorhergehenden Ansprüche, **dadurch gekennzeichnet, dass** wenigstens ein Freigabetaster (8, 9), bevorzugt jeweils dem jeweiligen Meßfühler (7) zugeordnet, für die zu messenden Werte vorgesehen ist, zur Freigabe der soeben gemessenen Werte an die Steuerung.

12. Längenmeßvorrichtung nach einem der vorhergehenden Ansprüche, **dadurch gekennzeichnet, dass** die Meßeinrichtung eine Meßelektronik aufweist und diese eine Schnittstelle zur Steuerung aufweist.

13. Längenmeßvorrichtung nach einem der vorhergehenden Ansprüche, **dadurch gekennzeichnet, dass** zur Übertragung der gemessenen Werte Mittel vorgesehen sind, mittels derer die Übertragung per Funk, Ultraschall, Infrarot oder drahtgebunden erfolgt.

14. Längenmeßvorrichtung nach einem der vorergehenden Ansprüche, **dadurch gekennzeichnet, dass** eine Anzeige für die gemessenen Werte an der Längenmeßvorrichtung selbst vorgesehen ist und/oder eine Anzeige an der Steuerung vorgesehen ist, die die gemessenen Werte über die Steuerung anzeigt und/oder die gemessenen Werte permanent übertragen und angezeigt werden und/oder die Steuerung und/oder die Messelektronik eine Funktion zum Finden des größten und/oder kleinsten Wertes aufweist und diese Werte jeweils durch Signale anzeigt.

15. Längenmeßvorrichtung nach einem der vorhergehenden Ansprüche, **dadurch gekennzeichnet, dass** in der Vorrichtung wenigstens ein Lagesensor vorgesehen ist, der die jeweilige Lage der Vorrichtung erkennt und an die Steuerung übermittelt.

16. Längenmeßvorrichtung nach einem der vorhergehenden Ansprüche 7 bis 15, **dadurch gekennzeichnet, dass** an der Vorrichtung, vorzugsweise an dem Führungsgehäuse (5) wenigstens eine Signaleinrichtung vorgesehen ist, die anzeigt, dass der oder die gemessenen Werte von der Steuerung übernommen wurden und/oder die Aufstellfläche (2) des Grundkörpers (1) die gleiche Breite aufweist wie der Grundkörper (1) und/oder der Grundkörper (1) griffgünstig bzw. ergonomisch günstig geformt bzw. zumindest abschnittsweise als Griff ausgebildet ist.

17. Längenmeßvorrichtung nach einem der vorhergehenden Ansprüche, **dadurch gekennzeichnet, dass** der Meßfühler (7) mehrere gegebenenfalls auch unterschiedlich ausgestaltete Fühlerspitzen (10, 11, 12) aufweist.

18. Längenmeßvorrichtung nach Anspruch 17, **dadurch gekennzeichnet, dass** die Fühlerspitzen (10, 11, 12) gleicher Dicke (d) und in einer Ebene (16), insbesondere drehbar angeordnet sind und/oder der Messfühler (7) in Axialrichtung zur Taststange (6) beweglich ausgebildet ist.

19. Längenmeßvorrichtung nach einem der vorergehenden Ansprüche 17 und 18, **dadurch gekennzeichnet, dass** der axiale Bewegungsspielraum des Messfühlers (7) auf bzw. in der Taststange (6) exakt der Dicke (d) der Fühlerspitzen (10, 11, 12) entspricht und/oder die Fühlerspitzen (10, 11, 12) mit breiter Anlagefläche, mit schmaler Anlagefläche oder mit Doppelspitzen ausgeführt sind und/oder zwei flächig ausgebildete Fühlerspitzen (13, 14) vorgesehen sind, die durch einen schmaler ausgebildeten Steg (15) miteinander verbunden sind.

20. Holz- oder Kunststoffbearbeitungsmaschine mit einer Steuerung für die Werkzeugpositionierung und einer Längenmeßvorrichtung nach einem der vorhergehenden Ansprüchen zur Ermittlung und Einstellung der Lage von Werkzeugen, wobei die Längenmeßvorrichtung die gemessenen Werte an die Steuerung überträgt, diese die Werte anzeigt und über die Steuerung die Position der Werkzeuge entsprechend korrigier- bzw. einstellbar ist.

21. Holz- oder Kunststoffbearbeitungsmaschine nach Anspruch 20, **dadurch gekennzeichnet, dass** in der Steuerung Einstellmuster für die Einstellung von verschiedenen Werkstückmaßen hinterlegt sind und/oder die Steuerung dem Bediener über die Anzeige anzeigt, welches Maß mittels der Längenmeßvorrichtung wie zu ermitteln ist und/oder die Steuerung derart ausgebildet ist, dass die nach Vorgabe der Steuerung ermittelten Werte der Längenmeßvorrichtung automatisch in der Steuerung übernehmbar beziehungsweise verarbeitbar sind und/oder eine Anzeige der Steuerung die von der Längenmeßvorrichtung gemessenen Werte anzeigt.

22. Holz- oder Kunststoffbearbeitungsmaschine nach einem oder mehreren der vorherigen Ansprüche 20 bis 21, **dadurch gekennzeichnet, dass** außerhalb der Maschine ein Werkzeugeinstellplatz vorgesehen ist und die mit der Maschine verbundene Längenmeßvorrichtung ein auf dem Werkzeugeinstellplatz angeordnetes Werkzeug vermißt.

23. Verfahren für das Einstellen der Werkzeugmaße in einer Holz- oder Kunststoffbearbeitungsmaschine nach einem oder mehreren der vorhergehenden Ansprüche 20 bis 22, wobei das zu vermessende Werkzeug in der Bearbeitungsmaschine oder einem Werkzeugeinstellplatz vorgehalten wird, eine im Übrigen mobile Längenmeßvorrichtung nach einem der Ansprüche 1 bis 19 derart an dem Werkzeug positioniert wird, dass zumindest eine Aufstellfläche der Längenmeßvorrichtung auf einer Maschinenreferenzfläche anlegbar ist, ein Meßfühler an das Werkzeug anstellbar ist und durch eine Datenfreigabe der gemessene Wert auf die Steuerung der Maschine übertragen wird.

## Claims

1. Length measuring device which can be put against a machine reference surface, in particular for setting tools on machine tools with a control, the length measuring device having a measuring system and the length measuring device having an interface for controlling a machine tool which serves for transmitting the measured values to the control, and the length measuring device having a basic body (1) with at least one placing surface (2) which can be put against a machine reference surface (4), **characterized in that** the basic body (1) has two, a first and a second placing surfaces (2, 201, 202) orientated rectangular towards each other which each can be put against two different first and second machine reference surfaces (4, 40) to interact (2, 201, 202) with at least one machine reference surface (4, 40), and a support body (3) with a support surface (30) is provided interacting with at least one of the machine reference surfaces (4, 40).

2. Length measuring device according to claim 1, **characterized in that** the basic body has a guide rod (17), and the guide housing (5) is supported on bearings and guided shifting, if necessary it can be fixed, on the guide rod (17).

3. Length measuring device according to one of the preceding claims, **characterized in that** the placing surface (2) can be put against, in particular placed against or pressed against the machine reference surface (4), and/or the basic body (1) is bent, in particular rectangular with reference to the placing surface (2).

4. Length measuring device according to claim 1, **characterized in that** the basic body (1) has a shape differing from the circular arc shape, and/or the basic body (1) is divided into two adjusting saddles (19, 19').

5. Length measuring device according to one of the preceding claims, **characterized in that** the support body (3) is designed wider than the basic body (1), and/or the supporting surface (30) and the placing surface (2) each have a longitudinal extension, and the longitudinal extensions of the support surface (30) and of the placing surface (2) are orthogonal, preferably rectangular towards each other.

6. Length measuring device according to one of the preceding claims, **characterized in that** the basic body (1) or the adjusting saddle (19) are designed bent for forming a first and a second placing surface.

7. Length measuring device according to one of the preceding claims, **characterized in that** a guide housing (5) is arranged moving or stationary at the basic body (1), and in the guide housing a probe rod (6) carrying a measuring sensor (7) is supported on bearings and guided moving.

8. Length measuring device according to claim 7, **characterized in that** the measuring sensor (7) is arranged on the end of the probe rod (6), and/or the probe rod (6) carries two measuring sensors (7, 7'), preferably on its ends, and/or the guide housing (5) has a cross guide, and/or the first and second placing surfaces (201, 202) are orientated orthogonal, preferably rectangular to one another, and the measuring sensor is supported on bearings and guided moving in a plane which is orthogonal, preferably rectangular to the first and second placing surface (201, 202).

9. Length measuring device according to one of the preceding claims 7 and 8, **characterized in that**, when the first and second placing surfaces (201, 202) are put differently against the first and second machine reference surfaces (4, 40), for example in such a way that the first placing surface (201) is put against the second machine reference surface (40), another, in particular differently orientated tool can be measured, and/or the basic body (1) is designed wider than the guide housing (5), and/or the probe rod (6) extends rectangular or moves rectangular to the placing surface (2), and/or the measuring system is provided in the guide housing (5) and measures the relative position of a probe rod (6) and/or of a measuring sensor (7) to the guide housing (5), and/or the position of the guide housing on the guide rod, and/or the length measuring device can be vertically or rectangular put against the machine reference surface (4) for measurements by means of the placing surface (2) and, if necessary, the support surface (30) on the machine reference surface (4).

10. Length measuring device according to one of the preceding claims, **characterized in that** the placing surface (2) and the support surface (30) are in a common plane, and/or at the support body (3) at least one positioning surface (31, 32) is provided, and the positioning surface (31) is orientated rectangular to the support surface (30), and/or the measuring sensor (7) can be positioned freely by a rocker-like support of the positioning surface (31, 32) on a first machine reference surface (4) in parallel way of measuring above the first machine reference surface (4) within the swiveling area of the basic body (1) or the guide house (5) by acting as leg of the rocker, and the placing surface (2) and/or the support surface (30) are put against a second freely defined machine reference surface (40) or a stopper, and/or the placing surface (2) and/or the support surface (30) and/or the positioning surface (31, 32) are designed as cutting edges or edges, and/or the placing surfaces (2), the support surface (30) and the positioning surface (31, 32) have dot-like supports for positioning on the machine reference surface.

11. Length measuring device according to one of the preceding claims, **characterized in that** at least one enable sensor (8, 9), preferably assigned to the respective measuring sensor (7), is provided for the values to be measured for enabling the just measured values to the control.

12. Length measuring device according to one of the preceding claims, **characterized in that** the measuring system has a measuring electronic system with an interface for the control.

13. Length measuring device according to one of the preceding claims, **characterized in that** for transmitting the measured values means are provided by means of which the transmission is carried out via radio, ultrasonics, infrared or by wire.

14. Length measuring device according to one of the preceding claims, **characterized in that** a display for the measured values is provided at the length measuring device itself, and/or a display is provided at the control displaying the measured values via the control, and/or the measured values are transmitted and displayed permanently, and/or the control and/or the measuring electronic system has a function for finding the largest and/or smallest value, and displays these values each by signals.

15. Length measuring device according to one of the preceding claims, **characterized in that** in the device at least one position sensor is provided which recognizes the respective position of the device and transmits it to the control.

16. Length measuring device according to one of the preceding claims 7 to 15, **characterized in that** on the device, preferably on the guide housing (5), at least one signal device is provided displaying that the measured value/s has/have been taken over by the control, and/or the placing surface (2) of the basic body (1) has the same width as the basic body (1), and/or the basic body (1) is designed handily or ergonomically or is at least designed in sections as a handle.

17. Length measuring device according to one of the preceding claims, **characterized in that** the measuring sensor (7) has several, if necessary also differently designed sensor tips (10, 11, 12).

18. Length measuring device according to claim 17, **characterized in that** the sensor tips (10, 11, 12) with the same thickness (d), and are arranged in one plane (16), in particular rotating, and/or the measuring sensor (7) is designed moving in axial direction to the probe rod (6).

19. Length measuring device according to one of the preceding claims 17 and 18, **characterized in that** the axial range of movement of the measuring sensor (7) corresponds on or in the probe rod (6) exactly with the thickness (d) of the sensor tips (10, 11, 12), and/or the sensor tips (10, 11, 12) are designed with a wide contact surface, with a narrow contact surface or with double tips, and/or two planar designed sensor tips (13, 14) are provided connected to each other by a web (15) designed narrower.

20. Wood or synthetic machine tool with a control for positioning the tool and a length measuring device according to one of the preceding claims for defining and adjusting the position of tools, wherein the length measuring device transmits the measured values to the control, this displays the values, and the position of the tools can be corrected or adjusted accordingly via the control.

21. Wood and synthetic machine tool according to claim 20, **characterized in that** in the control adjusting patterns for adjusting different tool dimensions are deposited, and/or the control shows the service person via the display which dimension and how it has to be defined by means of the length measuring device, and/or the control is designed in such a way that the values of the length measuring device defined according to the set values of the control can be taken over or processed automatically in the control, and/or a display of the control displays the values measured by length measuring device.

22. Wood and synthetic machine tool according to one or more of the preceding claims 20 to 21, **characterized in that** outside the machine a tool adjusting place is provided, and the length measuring device connected with the machine measures a tool arranged on the tool adjusting place.

23. Method for adjusting the tool dimensions in a wood or synthetic machine tool according to one or more of the preceding claims 20 to 22, wherein the tool to be measured is supplied in the machine tool or in a tool adjusting place, an otherwise mobile length measuring device according to one of the claims 1 to 19 is positioned on the tool in such a way that at least one placing surface of the length measuring device can be put on a machine reference surface, a measuring sensor can be adjusted to the tool and the measured value is transmitted by a data entering to the control of the machine.

## Revendications

1. Dispositif de mesure des longueurs pouvant être mis en contact avec une surface de référence d'une machine, destiné en particulier à l'ajustement des outils d'une machine d'usinage ayant un système de contrôle et comportant un dispositif de mesure et une interface de données orientée vers le système de contrôle d'une machine d'usinage permettant de transmettre les valeurs mesurées au système de contrôle, le dispositif de mesure des longueurs comportant une base (1) possédant au moins une surface d'appui (2) pouvant être guidée contre une surface de référence de machine (4), **caractérisé en ce que** la base (1) comporte deux surfaces d'appui (2, 201, 202), une première étant perpendiculaire à une deuxième, les deux pouvant être mises en contact avec une première et une deuxième surface de référence de machine (4, 40), l'une étant différente de l'autre, afin que chacune des surfaces d'appui (2, 201, 202) soit en interaction avec au moins une surface de référence de machine (4, 40) et **en ce qu'**un support (3) possédant une surface de support (30) est prévu, interagissant avec au moins une surface de référence de machine (4, 40).

2. Dispositif de mesure des longueurs selon la revendication 1, **caractérisé en ce que** la base possède une tige de guidage (17) et **en ce que** le châssis de guidage (5) est maintenu mobile et est guidé par la tige de guidage (17) et pouvant, le cas échéant, être immobilisé.

3. Dispositif de mesure des longueurs selon une des revendications précédentes, **caractérisé en ce que** la surface d'appui (2) peut être mise en contact avec la surface de référence de machine (4) et en particulier peut appuyer ou être appuyée contre elle et/ou **en ce que** la base (1) est coudée par rapport à la surface d'appui (2) formant en particulier un angle droit.

4. Dispositif de mesure des longueurs selon la revendication 1, **caractérisé en ce que** la base (1) possède une forme différente d'une forme en cercle et/ou **en ce que** la base (1) est fourchue, c'est-à-dire divisée en deux patins d'appui (19, 19').

5. Dispositif de mesure des longueurs selon une des revendications précédentes, **caractérisé en ce que** le support (3) possède une largeur supérieure à celle de la base (1) et/ou **en ce que** la surface de support (30) et la surface d'appui (2) sont chacune allongées et **en ce que** les directions d'allongement de la surface de support (30) et de la surface d'appui (2) sont perpendiculaires l'une par rapport à l'autre.

6. Dispositif de mesure des longueurs selon une des revendications précédentes, **caractérisé en ce que** la base (1) ou la base fourchue (19) possède une configuration coudée afin de créer une première et une deuxième surface d'appui.

7. Dispositif de mesure des longueurs selon une des revendications précédentes, **caractérisé en ce qu'**un châssis de guidage (5) est situé sur la base (1) de façon mobile ou immobile et **en ce qu'**il existe à l'intérieur du châssis de guidage une tige capteur (6) mobile et guidée, qui comporte un capteur (7).

8. Dispositif de mesure des longueurs selon la revendication 7, **caractérisé en ce que** le capteur (7) est situé à l'extrémité de la tige capteur (6) et/ou **en ce que** la tige capteur (6) comporte de préférence deux capteurs (7, 7') à ses extrémités et/ou **en ce que** le châssis de guidage (5) comporte un guidage croisé et/ou **en ce que** la première et la deuxième surface d'appui (201, 202) forment de préférence un angle droit et **en ce que** le capteur est mobile et guidé dans un plan, qui est de préférence perpendiculaire à la première et à la deuxième surface d'appui (201, 202).

9. Dispositif de mesure des longueurs selon une des revendications précédentes 7 et 8, **caractérisé en ce qu'**un rapprochement différent de la première et de la deuxième surfaces d'appui (201, 202) de la première et de la deuxième surfaces de référence de machine (4, 40), par exemple par un rapprochement de la première surface d'appui (201) de la deuxième surface de référence de machine (40), permet de mesurer un autre outil, en particulier un outil d'une orientation différente et/ou en ce que la base (1) possède une largeur supérieure à celle du châssis de guidage (5) et/ou **en ce que** la tige capteur (6) est orientée perpendiculairement à la surface d'appui (2) ou **en ce qu'**elle est mobile dans cette direction perpendiculaire et/ou **en ce que** le dispositif de mesure est situé à l'intérieur du châssis de guidage (5) et mesure la position relative de la tige capteur (6) et/ou du capteur (7) par rapport au châssis de guidage (5) et/ou la position du châssis sur la tige de guidage et/ou **en ce que** le dispositif de mesure des longueurs peut être posé par sa surface d'appui (2) et le cas échéant par sa surface de support (30) sur la surface de référence de machine (4) afin d'effectuer des mesures en direction verticale ou perpendiculairement à la surface de référence de machine (4).

10. Dispositif de mesure des longueurs selon une des revendications précédentes, **caractérisé en ce que** la surface d'appui (2) et la surface de support (30) sont situées dans un plan commun et/ou **en ce qu'**au moins une surface de positionnement (31, 32) existe au niveau du support (3) et est orientée perpendiculairement à la surface de support (30) et/ou **en ce que** le capteur (7) peut être librement positionné au-dessus de la première surface de référence de machine (4) et à l'intérieur de la zone de basculement délimitée par la dimension de la construction semblable à une bascule comprenant également la base (1) et le châssis de guidage (5) et dont le point d'articulation est la surface de positionnement (31, 32) qui repose sur la première surface de référence de machine (4) permettant ainsi dans une sorte de mesure parallèle d'appuyer la surface d'appui (2) et/ou la surface de support (30) contre une deuxième surface de référence de machine (40) ou une butée pouvant être choisie librement et/ou **en ce que** la surface d'appui (2) et/ou la surface de support (30) et/ou la surface de positionnement (31, 32) possèdent des bords ou des lames tranchantes et/ou **en ce que** la surface d'appui (2), la surface de support (30) et la surface de positionnement (31, 32) possèdent des appuis ponctuels pour le positionnement sur la surface de référence de machine.

11. Dispositif de mesure des longueurs selon une des revendications précédentes, **caractérisé en ce qu'**il existe au moins un commutateur de déblocage (8, 9), correspondant de préférence à un capteur (7) et permettant de débloquer la transmission des valeurs les plus récents vers le système de contrôle.

12. Dispositif de mesure des longueurs selon une des revendications précédentes, **caractérisé en ce que** le dispositif de mesure comporte une électronique de mesure possédant une interface orientée vers le système de contrôle.

13. Dispositif de mesure des longueurs selon une des revendications précédentes, **caractérisé en ce que** la transmission des valeurs mesurées est réalisée par des moyens prévus permettant une transmission par émission électromagnétique, par ultrason, par infrarouge ou par voie filaire.

14. Dispositif de mesure des longueurs selon une des revendications précédentes, **caractérisé en ce que** le dispositif de mesure de longueurs possède un afficheur destiné à afficher les valeurs mesurées et/ou **en ce qu'**un afficheur est situé au niveau du système de contrôle affichant les valeurs mesurées via le système de contrôle et/ou **en ce que** les valeurs mesurées sont transmises et affichées en continu et/ou **en ce que** le système de contrôle et/ou l'électronique de mesure possède une fonction de détection des valeurs maximale et minimale et les affiche par des signaux.

15. Dispositif de mesure des longueurs selon une des revendications précédentes, **caractérisé en ce que** le dispositif de mesure de longueurs comporte au moins un capteur d'orientation détectant la position du dispositif et la transmettant vers le système de contrôle.

16. Dispositif de mesure des longueurs selon une des revendications précédentes 7 à 15, **caractérisé en ce qu'**au moins un dispositif de signalisation est prévu au niveau du dispositif de mesure et de préférence au niveau du châssis de guidage (5) permettant d'afficher que la ou les valeurs mesurées ont été reçues par le système de contrôle et/ou **en ce que** la surface d'appui (2) de la base (1) possède une largeur identique à celle de la base (1) et/ou **en ce que** la base (1) possède une forme facile à saisir ou est ergonomique ou au moins partiellement formée comme une poignée.

17. Dispositif de mesure des longueurs selon une des revendications précédentes, **caractérisé en ce que** le capteur (7) comporte plusieurs et, le cas échéant, différentes pointes de mesure (10, 11, 12).

18. Dispositif de mesure des longueurs selon la revendication 17, **caractérisé en ce que** les pointes de mesure (10, 11, 12) ont des épaisseurs (d) identiques, sont distribuées dans un plan (16) et peuvent, en particulier, pivoter et/ou **en ce que** le capteur (7) est mobile en direction axiale de la tige capteur (6).

19. Dispositif de mesure des longueurs selon une des deux revendications précédentes 17 ou 18, **caractérisé en ce que** le jeu de mouvement axial du capteur (7) sur ou à l'intérieur de la tige capteur (6) correspond précisément à l'épaisseur (d) des pointes de mesure (10, 11, 12) et/ou **en ce que** les pointes de mesure (10, 11, 12) possèdent une configuration avec des surfaces d'appui larges, fines ou avec une double pointe et/ou **en ce qu'**il existe deux pointes de mesure plates (13, 14) interconnectées par une traverse étroite (15).

20. Machine d'usinage de bois ou de plastique comportant un système de contrôle destiné au positionnement de l'outil d'usinage et un dispositif de mesure des longueurs selon une des revendications précédentes prévu pour la mesure et l'ajustement de la position d'outils et transmettant ces valeurs mesurées au système de contrôle, qui les affiche ensuite et qui, en fonction de ces données, corrige ou ajuste la position des outils.

21. Machine d'usinage de bois ou de plastique selon la revendication 20, **caractérisée en ce que** le système de contrôle comporte des schémas d'ajustement appropriés pour l'ajustement de pièces à usiner de différentes dimensions et/ou **en ce que** le système de contrôle explique à l'opérateur via l'afficheur quelle dimension est à mesurer et comment en utilisant le dispositif de mesure des longueurs et/ou **en ce que** le système de contrôle est configurée de façon à ce que les mesures prises par le dispositif de mesure des longueurs selon les consignes du système de contrôle sont automatiquement utilisables et peuvent être directement traitées par le système de contrôle et/ou **en ce qu'**un afficheur du système de contrôle affiche les valeurs mesurées par le dispositif de mesure des longueurs.

22. Machine d'usinage de bois ou de plastique selon une ou deux des revendications précédentes 10 et 21, **caractérisée en ce qu'**il existe en dehors de la machine une zone d'ajustement des outils d'usinage où un dispositif de mesure des longueurs connecté à la machine prend les mesures de l'outil d'usinage.

23. Procédé de prise de mesures d'un outil au niveau d'une machine d'usinage de bois ou de plastique selon une ou plusieurs des revendications précédentes 20 à 22, appliqué à un outil d'usinage dont les mesures sont à prendre, et qui est situé dans la machine d'usinage ou dans une zone d'ajustement des outils d'usinage, procédé comprenant le positionnement du dispositif de mesure des longueurs mobile et configuré selon une des revendications 1 à 19, de façon à ce qu'au moins une surface d'appui de ce dispositif de mesure des longueurs soit mise en contact avec une surface de référence de machine, puis un capteur est approché de l'outil d'usinage et la valeur mesurée est dès son déblocage transmise vers le système de contrôle de la machine.
